(19) Europäisches Patentamt
European Patent Office
Office européen des brevets

(11) EP 4 665 015 A1

(12) **EUROPEAN PATENT APPLICATION**
published in accordance with Art. 153(4) EPC

(43) Date of publication:
17.12.2025 Bulletin 2025/51

(21) Application number: 23920378.9

(22) Date of filing: 08.02.2023

(51) International Patent Classification (IPC):
H04W 56/00 (2009.01)        H04B 5/00 (2024.01)

(52) Cooperative Patent Classification (CPC):
H04B 5/00; H04W 56/00

(86) International application number:
PCT/CN2023/074959

(87) International publication number:
WO 2024/164169 (15.08.2024 Gazette 2024/33)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(71) Applicant: GUANGDONG OPPO MOBILE
TELECOMMUNICATIONS
CORP., LTD.
Dongguan, Guangdong 523860 (CN)

(72) Inventor: XU, Weijie
Dongguan, Guangdong 523860 (CN)

(74) Representative: RGTH
Patentanwälte PartGmbB
Neuer Wall 10
20354 Hamburg (DE)

(54) **WIRELESS COMMUNICATION METHOD AND DEVICE**

(57) Embodiments of the present application provide a wireless communication method and a device, which can realize the synchronization and/or broadcast of an ambient Internet of Things device. The wireless communication method comprises: an ambient Internet of Things device receives a synchronization signal and/or a broadcast channel.

**200**

FIG. 11

**Description**

### TECHNICAL FIELD

Embodiments of this application relate to the communications field, and more specifically, to a wireless communication method and device.

### BACKGROUND

An internet of things (internet of things, IoT) (such as a cellular passive internet of things or a wireless local area network (Wireless Local Area Networks, WLAN) passive internet of things) may support an ambient internet of things device (Ambient IoT device), to meet internet of things communication requirements of corresponding types in different application scenarios. Considering a service feature of the ambient IoT device, a capability limitation of the ambient IoT device, and a limitation on an operating power consumption of the ambient IoT device, a conventional synchronization manner and broadcast manner cannot meet a requirement for the ambient IoT device, and how to implement synchronization and/or broadcast for the ambient IoT device is a problem that needs to be resolved.

### SUMMARY

Embodiments of this application provide a wireless communication method and a device, to implement synchronization and/or broadcast for an ambient internet of things device.

According to a first aspect, a wireless communication method is provided, and the method includes: receiving, by an ambient internet of things device, a synchronization signal and/or a broadcast channel.

According to a second aspect, a wireless communication method is provided, and the method includes: sending, by a communication device, a synchronization signal and/or a broadcast channel to an ambient internet of things device.

According to a third aspect, a communication device is provided, where the communication device is a first communication device and is configured to execute the method in the first aspect. Specifically, the communication device includes a functional module configured to execute the method in the first aspect.

According to a fourth aspect, a communication device is provided, where the communication device is a second communication device and is configured to execute the method in the second aspect. Specifically, the communication device includes a functional module configured to execute the method in the second aspect.

According to a fifth aspect, a communication device is provided, where the communication device is a first communication device, and the communication device includes a processor and a memory. The memory is configured to store a computer program, and the processor is configured to invoke and run the computer program stored in the memory, to cause the communication device to execute the method in the first aspect.

According to a sixth aspect, a communication device is provided, where the communication device is a second communication device, and the communication device includes a processor and a memory. The memory is configured to store a computer program, and the processor is configured to invoke and run the computer program stored in the memory, to cause the communication device to execute the method in the second aspect.

According to a seventh aspect, an apparatus is provided, and configured to implement the method in any one of the first aspect and the second aspect.

Specifically, the apparatus includes a processor, configured to invoke a computer program from a memory and run the computer program, to cause a device installed with the apparatus to execute the method in any one of the first aspect and the second aspect.

According to an eighth aspect, a computer-readable storage medium is provided, and the computer-readable storage medium is configured to store a computer program. The computer program causes a computer to execute the method in any one of the first aspect and the second aspect.

According to a ninth aspect, a computer program product is provided, including computer program instructions. The computer program instructions cause a computer to execute the method in any one of the first aspect and the second aspect.

According to a tenth aspect, a computer program is provided. When the computer program is run on a computer, the computer is caused to execute the method in any one of the first aspect and the second aspect.

Through the foregoing technical solutions, synchronization and/or broadcast for an ambient internet of things device can be implemented.

### BRIEF DESCRIPTION OF DRAWINGS

FIG. 1 is a schematic diagram of a communications system architecture to which an embodiment of this application is applied.

FIG. 2 is a schematic diagram of zero-power communication according to this application.

FIG. 3 is a schematic diagram of backscatter communication according to this application.

FIG. 4 is a schematic diagram of energy harvesting according to this application.

FIG. 5 is a diagram of a circuit principle of resistive load modulation according to this application.

FIG. 6 is a schematic diagram of non-return-to-zero inverted coding according to this application.

FIG. 7 is a schematic diagram of Manchester coding according to this application.

FIG. 8 is a schematic diagram of unipolar return-to-zero coding according to this application.

FIG. 9 is a schematic diagram of differential biphasic coding according to this application.

FIG. 10 is a schematic diagram of Miller coding according to this application.

FIG. 11 is a schematic flowchart of a wireless communication method according to an embodiment of this application.

FIG. 12 is a schematic diagram of a beacon channel according to an embodiment of this application.

FIG. 13 is a diagram of a signal/channel structure of a synchronization signal and a broadcast channel including a start according to an embodiment of this application.

FIG. 14 is a schematic diagram of a synchronization signal including a first sequence and a second sequence according to an embodiment of this application.

FIG. 15 is a schematic diagram of transmission of a synchronization signal/broadcast channel in time domain according to an embodiment of this application.

FIG. 16 is a schematic diagram of a first-type synchronous broadcast channel and a second-type synchronous broadcast channel according to an embodiment of this application.

FIG. 17 is a schematic block diagram of an ambient internet of things device according to an embodiment of this application.

FIG. 18 is a schematic block diagram of a communication device according to an embodiment of this application.

FIG. 19 is a schematic block diagram of another communication device according to an embodiment of this application.

FIG. 20 is a schematic block diagram of an apparatus according to an embodiment of this application.

FIG. 21 is a schematic block diagram of a communications system according to an embodiment of this application.

## DESCRIPTION OF EMBODIMENTS

The following describes the technical solutions in embodiments of this application with reference to the accompanying drawings in embodiments of this application. Apparently, the described embodiments are some rather than all of embodiments of this application. All other embodiments obtained by a person of ordinary skill in the art based on embodiments of this application without creative efforts shall fall within the protection scope of this application.

The technical solutions in embodiments of this application may be applied to various communications systems, for example, a global system of mobile communications (Global System of Mobile communication, GSM), a code division multiple access (Code Division Multiple Access, CDMA) system, a wideband code division multiple access (Wideband Code Division Multiple Access, WCDMA) system, a general packet radio service (General Packet Radio Service, GPRS), a long term evolution (Long Term Evolution, LTE) system, an advanced long term evolution (Advanced long term evolution, LTE-A) system, a new radio (New Radio, NR) system, an evolved system of an NR system, an LTE-based access to unlicensed spectrum (LTE-based access to unlicensed spectrum, LTE-U) system, an NR-based access to unlicensed spectrum (NR-based access to unlicensed spectrum, NR-U) system, a non-terrestrial network (Non-Terrestrial Networks, NTN) system, a universal mobile telecommunications system (Universal Mobile Telecommunication system, UMTS), a wireless local area network (Wireless Local Area Network, WLAN), internet of things (internet of things, IoT), wireless fidelity (Wireless Fidelity, WiFi), a fifth-generation (5th-Generation, 5G) system, a sixth-generation (6th-Generation, 6G) system, or another communications system.

Generally, a quantity of connections supported by a conventional communications system is limited and is also easy to implement. However, with development of communication technologies, a mobile communications system not only supports conventional communication, but also supports, for example, device-to-device (Device to Device, D2D) communication, machine-to-machine (Machine to Machine, M2M) communication, machine type communication (Machine Type Communication, MTC), vehicle-to-vehicle (Vehicle to Vehicle, V2V) communication, sidelink (sidelink, SL) communication, or vehicle-to-everything (Vehicle to everything, V2X) communication. Embodiments of this application may also be applied to these communications systems.

In some embodiments, a communications system in embodiments of this application may be applied to a carrier aggregation (Carrier Aggregation, CA) scenario, a dual connectivity (Dual Connectivity, DC) scenario, a standalone (Standalone, SA) networking scenario, or a non-standalone (Non-Standalone, NSA) networking scenario.

In some embodiments, a communications system in embodiments of this application may be applied to an unlicensed spectrum, and the unlicensed spectrum may also be considered as a shared spectrum. Alternatively, a communications system in embodiments of this application may be applied to a licensed spectrum, and the licensed spectrum may also be considered as a non-shared spectrum.

In some embodiments, a communications system in embodiments of this application may be applied to a frequency band FR1 (corresponding to a frequency band range 410 MHz to 7.125 GHz), or may be applied to a frequency band FR2 (corresponding to a frequency band range 24.25 GHz to 52.6 GHz), or may be applied to a new frequency band, for example, corresponding to a frequency band range 52.6 GHz to 71 GHz, or a high frequency band corresponding to a frequency band range 71 GHz to 114.25 GHz.

Embodiments of this application are described with reference to a network device and a terminal device. The terminal device may also be referred to as user equipment (User Equipment, UE), an access terminal, a subscriber unit, a subscriber station, a mobile site, a mobile station, a remote station, a remote terminal, a mobile device, a user terminal, a terminal, a wireless communication device, a user agent, a user apparatus, or the like.

The terminal device may be a station (STATION, ST) in a WLAN, or may be a cellular phone, a cordless phone, a session initiation protocol (Session Initiation Protocol, SIP) phone, a wireless local loop (Wireless Local Loop, WLL) station, a personal digital assistant (Personal Digital Assistant, PDA) device, a handheld device having a wireless communication function, a computing device or any other processing device connected to a wireless modem, a vehicle-mounted device, a wearable device, a terminal device in a next generation communications system such as an NR network or a future evolved public land mobile network (Public Land Mobile Network, PLMN), or the like.

In embodiments of this application, the terminal device may be deployed on land, including being indoors or outdoors, handheld, wearable, or vehicle-mounted. The terminal device may also be deployed on water (for example, on a ship), or may be deployed in the air (for example, on an airplane, an air balloon, or a satellite).

In embodiments of this application, the terminal device may be a mobile phone (Mobile Phone), a pad (Pad), a computer with a wireless transceiver function, a virtual reality (Virtual Reality, VR) terminal device, an augmented reality (Augmented Reality, AR) terminal device, a wireless terminal device in industrial control (industrial control), a wireless terminal device in self-driving (self driving), a wireless terminal device in remote medical (remote medical), a wireless terminal device in smart grid (smart grid), a wireless terminal device in transportation safety (transportation safety), a wireless terminal device in smart city (smart city), a wireless terminal device in smart home (smart home), a vehicle-mounted communication device, a wireless communications chip, an application-specific integrated circuit (application specific integrated circuit, ASIC), a system-on-chip (System on Chip, SoC), or the like.

By way of example rather than limitation, in embodiments of this application, the terminal device may alternatively be a wearable device. The wearable device may also be referred to as an intelligent wearable device, and is a general term for wearable devices such as glasses, gloves, watches, clothes, and shoes that are intelligently designed and developed based on daily wearing by using a wearable technology. The wearable device is a portable device that can be directly worn or integrated into clothes or accessories of a user. In addition to being a hardware device, the wearable device can also realize various functions through software support, data interaction, and cloud interaction. In a broad sense, wearable smart devices may include a full-featured and large-sized device that can provide full or partial functions without relying on a smart phone, for example, a smart watch or smart glasses, and devices that focus on only a specific type of application function and need to cooperate with another device such as a smart phone for use, for example, various smart bracelets and smart jewelries for physical sign monitoring.

In embodiments of this application, the network device may be a device configured to communicate with a mobile device. The network device may be an access point (Access Point, AP) in a WLAN, may be a base transceiver station (Base Transceiver Station, BTS) in GSM or CDMA, may be a NodeB (NodeB, NB) in WCDMA, or may be an evolutional NodeB (Evolutional Node B, eNB or eNodeB) in LTE, or a relay station or an access point, or a vehicle-mounted device, a wearable device, a network device or a gNB (gNB) or a transmission reception point (Transmission Reception Point, TRP) in an NR network, or a network device in a future evolved PLMN, or a network device in an NTN, or the like.

By way of example rather than limitation, in embodiments of this application, the network device may have a mobility characteristic. For example, the network device may be a mobile device. In some embodiments, the network device may be a satellite or a balloon station. For example, the satellite may be a low earth orbit (low earth orbit, LEO) satellite, a medium earth orbit (medium earth orbit, MEO) satellite, a geostationary earth orbit (geostationary earth orbit, GEO) satellite, a high elliptical orbit (High Elliptical Orbit, HEO) satellite, or the like. In some embodiments, the network device may alternatively be a base station disposed in a location such as land or water.

In embodiments of this application, the network device may provide a service for a cell. The terminal device communicates with the network device by using a transmission resource (for example, a frequency domain resource or a spectrum resource) used by the cell. The cell may be a cell corresponding to the network device (for example, a base station). The cell may belong to a macro station or may belong to a base station corresponding to a small cell (Small cell). The small cell herein may include a metro cell (Metro cell), a micro cell (Micro cell), a pico cell (Pico cell), a femto cell (Femto cell), or the like. These small cells have a characteristic of small coverage and low transmit power, and are applicable to providing a high-rate data transmission service.

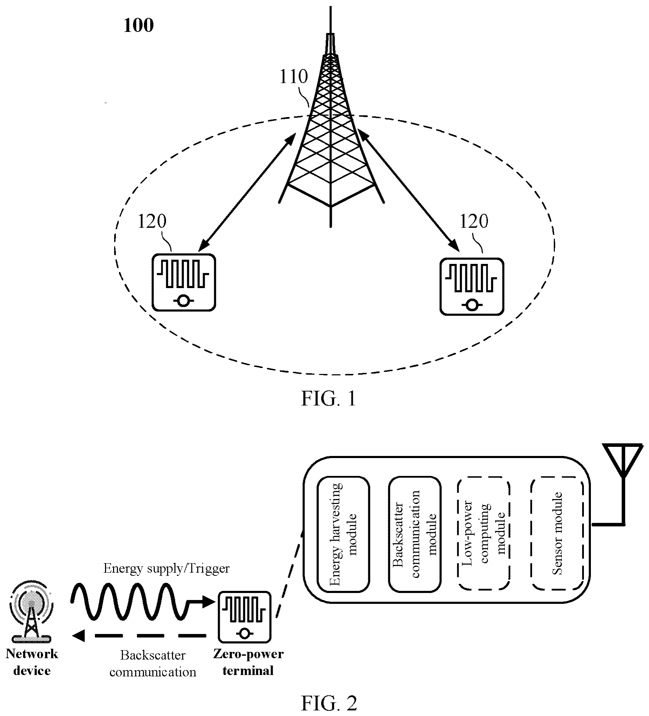

For example, a communications system 100 to which an embodiment of this application is applied is shown in FIG. 1. The communications system 100 may include a network device 110, and the network device 110 may be a device that communicates with a terminal device 120 (or referred to as a communications terminal or a terminal). The network device 110 may provide communication coverage for a specific geographic area, and may communicate with a terminal device within the coverage.

FIG. 1 exemplarily shows one network device and two terminal devices. In some embodiments, the communications system 100 may include a plurality of network devices, and another quantity of terminal devices may be included in coverage of each network device, which is not limited in embodiments of this application.

In some embodiments, the communications system 100 may further include another network entity such as a network controller or a mobility management entity, which is not limited in embodiments of this application.

It should be understood that in embodiments of this application, a device having a communication function in a network or a system may be referred to as a communication device. The communications system 100 shown in FIG. 1 is used as an example. The communication device may include a network device 110 and a terminal device 120 that have a communication function. The network device 110 and the terminal device 120 may be the foregoing specific devices, and details are not described herein again. The communication device may further include another device in the communications system 100, such as a network controller or a mobility management entity. This is not limited in embodiments of this application.

It should be understood that the terms "system" and "network" may often be used interchangeably in this specification. In this specification, the term "and/or" is merely an association relationship that describes associated objects, and represents that there may be three relationships. For example, A and/or B may represent three cases: only A exists, both A and B exist, and only B exists. In addition, the character "/" in this specification generally indicates an "or" relationship between the associated objects.

The terms used in implementations of this application are merely used to explain specific embodiments of this application, but are not intended to limit this application. The terms "first", "second", "third", "fourth", and the like in the specification, claims, and drawings of this application are used to distinguish between different objects, rather than to describe a specific order. In addition, the terms "include" and "have" and any variations thereof are intended to cover a non-exclusive inclusion.

It should be understood that, in embodiments of this application, "indication" mentioned herein may refer to a direct indication, or may refer to an indirect indication, or may mean that there is an association relationship. For example, A indicates B, which may mean that A directly indicates B, for example, B may be obtained by means of A; or may mean that A indirectly indicates B, for example, A indicates C, and B may be obtained by means of C; or may mean that there is an association relationship between A and B.

In descriptions of embodiments of this application, the term "corresponding" may mean that there is a direct or indirect correspondence between two elements, or that there is an association relationship between two elements, or that there is a relationship of "indicating" and "being indicated", "configuring" and "being configured", or the like.

In embodiments of this application, "predefined" or "pre-configured" may be implemented by pre-storing corresponding code, tables, or other forms that may be used to indicate related information in devices (for example, including a terminal device and a network device), and a specific implementation thereof is not limited in this application. For example, being predefined may refer to being defined in a protocol.

In embodiments of this application, the "protocol" may refer to a standard protocol in the communications field, and may be, for example, evolution of an existing LTE protocol, an NR protocol, a Wi-Fi protocol, or a protocol related to another related communications system. A type of the protocol is not limited in this application.

For better understanding of embodiments of this application, a zero-power communication technology related to this application is described.

Zero-power communication uses energy harvesting and backscatter communication technologies. A zero-power communication network includes a network device and a zero-power device, as shown in FIG. 2. The network device is configured to send a wireless power supply signal and a downlink communication signal to the zero-power device, and receive a backscattered signal of the zero-power device. A basic zero-power device includes an energy harvesting module, a backscatter communication module, and a low-power computing module. In addition, the zero-power device may further have a memory or a sensor, configured to store some basic information (such as an article identity) or obtain sensor data such as ambient temperature and ambient humidity.

Key technologies of zero-power communication mainly include radio frequency (Radio Frequency, RF) energy harvesting (Power Harvesting) and backscatter (Back Scattering) communication.

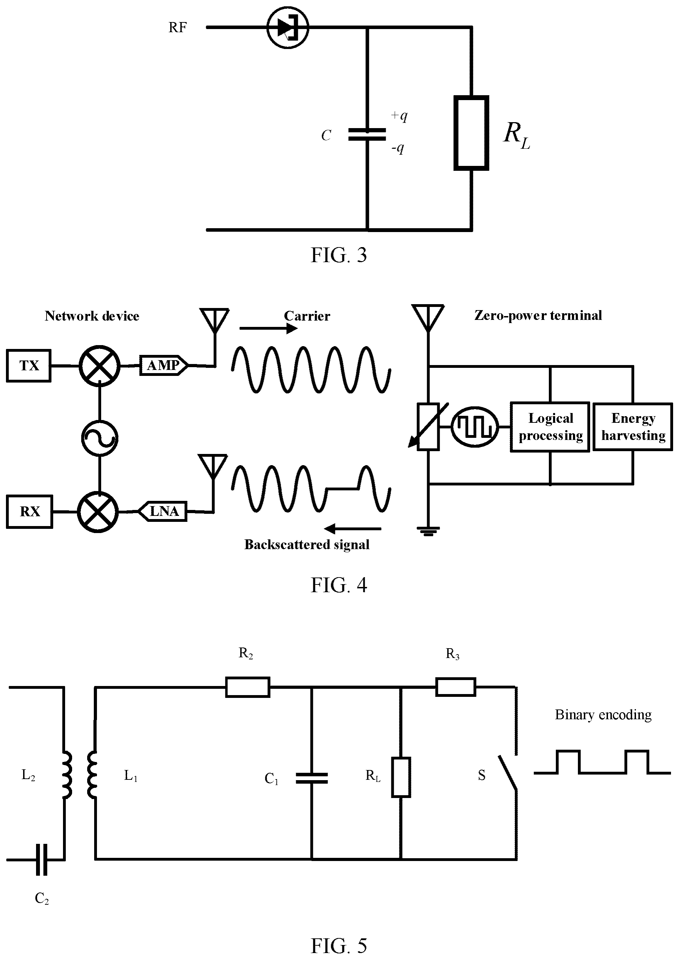

Specifically, the radio frequency energy harvesting (RF Energy Harvesting) may be shown in FIG. 3. A radio frequency energy harvesting module collects energy of a space electromagnetic wave based on an electromagnetic induction principle, and then obtains energy required for driving the zero-power device to work, for example, driving low-power demodulation and modulation modules, sensors, and memory reading. Therefore, the zero-power device does not require a conventional battery.

Specifically, backscatter (Back Scattering) communication may be shown in FIG. 4. A zero-power communication terminal receives a wireless signal sent by a network, modulates the wireless signal, loads information to be sent, and radiates the modulated signal through an antenna. This information transmission process is referred to as backscatter communication. Backscatter and a load modulation function are inseparable. Load modulation adjusts and controls a circuit parameter of an oscillation loop of the zero-power device based on beats of a data stream, so that a parameter such as an impedance of an electronic tag changes accordingly, thereby completing a modulation process. A load modulation technology mainly includes two modes: resistive load modulation and capacitive load modulation. In the resistive load modulation, a load is connected in parallel with a resistor, and the resistor is turned on or off based on control of a binary data stream, as shown in FIG. 5. Connection/disconnection of the resistor causes a change in circuit voltage, thereby achieving amplitude shift keying (Amplitude Shift Keying, ASK) modulation. That is, signal modulation and transmission are achieved by adjusting an amplitude of a backscattered signal of the zero-power device. Similarly, in the capacitive load modulation, connection/disconnection of a capacitor may achieve a change in circuit resonance frequency, to achieve frequency shift keying (Frequency Shift Keying, FSK) modulation. That is, signal modulation and transmission are achieved by adjusting an operating frequency of a backscattered signal of the zero-power device.

It may be learned that the zero-power device performs information modulation on a received signal through load modulation to implement a backscatter communication process. Therefore, the zero-power device has the following advantages:

(1) The zero-power device does not actively transmit a signal, and therefore does not require a complex radio frequency link, for example, does not require a power amplifier (Power Amplifier, PA), a radio frequency filter, or the like.
(2) The zero-power device does not need to actively generate a high-frequency signal and therefore does not require a high-frequency crystal oscillator.
(3) By means of backscatter communication, signal transmission of the zero-power device does not need to consume energy of the zero-power device.

Zero-power communication features low cost, zero-power consumption, small size, and other advantages, and may be widely applied in various industries, such as logistics, smart warehousing, smart agriculture, energy and power, and industrial Internet for vertical industries. Zero-power communication may also be applied to personal applications such as smart wearables and smart homes.

For better understanding of embodiments of this application, a coding scheme for zero-power communication related to this application is described.

For data transmitted through an electronic tag, binary digits "1" and "0" may be represented by different forms of code. A radio frequency identification system usually uses one of the following coding methods: non-return-to-zero (NRZ) inverted coding, Manchester (Manchester) coding, unipolar return-to-zero (Unipolar RZ) coding, differential binary phase (DBP) coding, Miller (Miller) coding, or differential coding. Generally, 0 and 1 are represented by using different pulse signals.

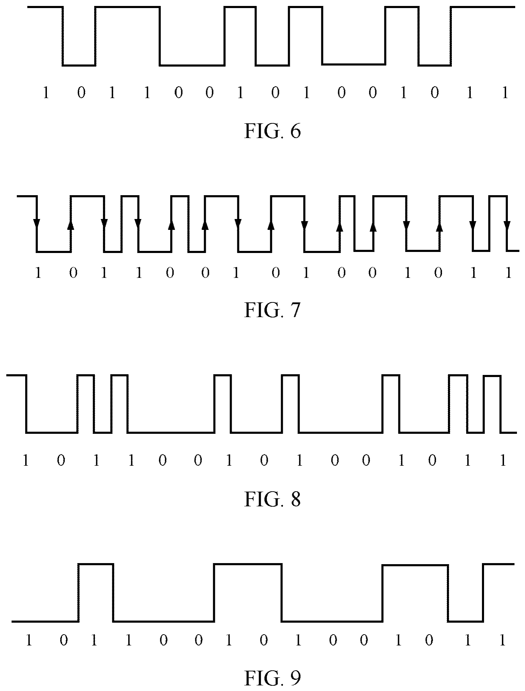

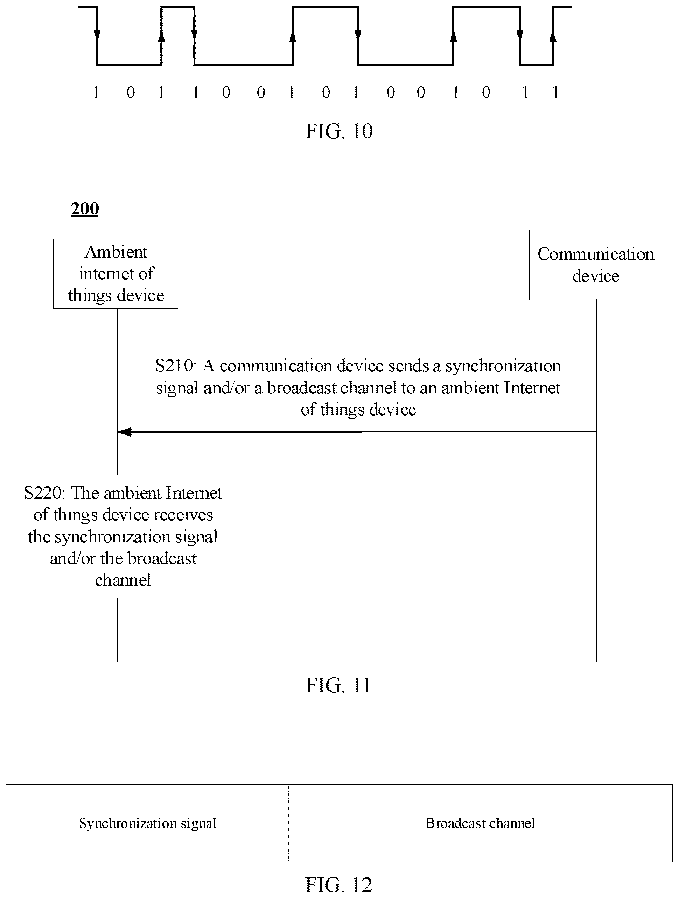

(1) Non-return-to-zero (NRZ, Non Return Zero) inverted coding: Non-return-to-zero inverted coding uses a high level to represent a binary "1", and uses a low level to represent a binary "0", as shown in FIG. 6.
(2) Manchester (Manchester) coding: Manchester coding is also referred to as split-phase coding (Split-Phase Coding). In Manchester coding, a value of a bit is represented by a change (up/down) in level at half a bit period of a bit length. A negative transition at half a bit period indicates a binary "1", and a positive transition at half a bit period indicates a binary "0", as shown in FIG. 7. Manchester coding is usually used for data transmission from an electronic tag to a reader/writer when load modulation or backscatter modulation of a carrier is used, because this facilitates discovery of a data transmission error. This is because a "no change" state in the bit length is not allowed. When data bits simultaneously sent by a plurality of electronic tags have different values, a received rising edge and a received falling edge cancel each other. As a result, a carrier signal is uninterrupted in the entire bit length. Because this state is not allowed, the reader/writer can determine, by using this error, a specific location at which a collision occurs.
(3) Unipolar return-to-zero (Unipolar RZ) coding: A high level in a first half of a bit period indicates a binary "1", and a low level signal for the entire bit period indicates a binary "0", as shown in FIG. 8. The unipolar return-to-return coding may be used to extract a bit synchronization signal.
(4) Differential biphasic (DBP) coding: In the differential biphasic coding, any edge in half a bit period represents a binary "0", and no edge is a binary "1", as shown in FIG. 9. In addition, a level is inverted at the beginning of each bit period. Therefore, a bit beat is easier to reconstruct for a receiver.
(5) Miller (Miller) coding: In the Miller coding, any edge in half a bit period represents a binary "1", and a level that is constant over a next bit period represents a binary "0". Level alternating is generated at the beginning of a bit period, as shown in FIG. 10. Therefore, a bit beat is easier to reconstruct for a receiver.

(6) Differential coding: In the differential coding, each binary "1" to be transmitted causes a change in signal level, while for binary "0", a signal level remains unchanged.

For better understanding of embodiments of this application, classification of zero-power devices related to this application is described.

Optionally, based on energy sources and usage manners of zero-power devices, zero-power devices may be classified into passive zero-power devices, semi-passive zero-power devices, and active zero-power devices.

(1) Passive zero-power device

A zero-power devices do not require a built-in battery. When the zero-power device is close to a network device (such as a reader/writer of a radio frequency identification (Radio Frequency Identification, RFID) system), the zero-power device is within a near-field range formed by radiation from an antenna of the network device. Therefore, an antenna of the zero-power device generates an induced current through electromagnetic induction, and the induced current drives a low-power chip circuit of the zero-power device to: implement demodulation of a forward link (downlink, which is a link from the network device to the zero-power device) signal and modulation of a backward link (uplink, which is a link from the zero-power device to the network device) signal, and so on. For a backscatter link, the zero-power device transmits a signal in a backscatter manner.

It may be learned that the passive zero-power device drives a forward link or a backward link without a built-in battery, making it a true zero-power device.

The passive zero-power device does not require a battery, and a radio frequency circuit and a baseband circuit are very simple. For example, a low noise amplifier (low-noise amplifier, LNA), a power amplifier (Power amplifier, PA), a crystal oscillator, analog-to-digital conversion (Analog-to-digital conversion, ADC), and other devices are not required. Therefore, the passive zero-power device has advantages of small size, light weight, very cheap price, long service life, and the like.

(2) Semi-passive zero-power device

A semi-passive zero-power device does not require installation of a conventional battery, but can use a radio frequency (Radio Frequency, RF) energy harvesting module to harvest radio wave energy, or uses solar/light/thermal/kinetic energy collection module to harvest energy, and stores the collected energy in an energy storage unit (such as a capacitor). After obtaining the energy, the energy storage unit may drive a low-power chip circuit of a zero-power device to: demodulate a forward link signal, modulate a backward link signal, and so on. For a backscatter link, the zero-power device transmits a signal in a backscatter manner.

It may be learned that the semi-passive zero-power device drives a forward link or a backward link without a built-in battery. Although the energy stored in the capacitor is used during operation, the energy comes from the radio energy harvested by the energy harvesting module. Therefore, the semi-passive zero-power device is also a true zero-power device.

The semi-passive zero-power device inherits many advantages of the passive zero-power device, and therefore has many advantages such as small size, light weight, very cheap price, and long service life.

(3) Active zero-power device

A zero-power device used in some scenarios may also be an active zero-power device, and this type of terminal may have a built-in battery (a conventional battery, such as a dry cell battery or a rechargeable lithium battery). The battery is configured to drive a low-power chip circuit of the active zero-power device, to demodulate a forward link signal, modulate a backward link signal, and so on. However, for a backscatter link, the active zero-power device transmits a signal in a backscatter manner. Therefore, zero-power consumption of this type of terminal is mainly reflected in that signal transmission on a backward link does not require power of the terminal, but instead relies on backscatter manner. Although the active zero-power device uses a battery, power consumption is very low due to an ultra-low-power communication technology. Therefore, in comparison with the prior art, a working life of the battery can be greatly improved.

The active zero-power device supplies power to an RFID chip by using the built-in battery, to increase a read/write range of a tag, thereby improving communication reliability. Therefore, the active zero-power device is applied to some scenarios that have a high requirement on a communication distance and a read delay.

It is well known that service types of a zero-power internet of things are identical to those of another internet of things, and their services are also dominated by uplink services. Therefore, based on transmitter types, zero-power devices may be classified into backscatter-based zero-power devices, active transmitter-based zero-power devices, and zero-power devices having both backscatter and active transmitters.

(1) Backscatter-based zero-power device

This type of zero-power device sends uplink data in the backscatter manner described above. This type of device has no active transmitter for active transmission, but only a backscatter transmitter. Therefore, when a terminal of this type sends data, a network device needs to provide a carrier, and the terminal device of this type performs backscattering based on the carrier, to implement data transmission.

(2) Active transmitter-based zero-power device

This type of zero-power device uses an active transmitter with an active transmit capability to perform uplink data transmission. Therefore, when sending data, this type of zero-power device can send data by using the active transmitter of the zero-power device, without requiring a network device to provide a carrier. An active transmitter applicable to the zero-power device may be, for example, an ultra-low-power ASK transmitter, an ultra-low-power FSK transmitter, or the like. Based on current implementation, when a signal of 100 $\mu$w is transmitted by this type of transmitter, overall power consumption of the transmitter may be reduced to 400 to 600 $\mu$w.

(3) Zero-power device having both backscatter and active transmitters

This type of terminal can support both backscatter and active transmitters. The terminal may determine which uplink signal transmission manner to use based on different situations (such as power statuses and available ambient energy sources) or based on scheduling of a network device, that is, determine whether to use backscatter or active transmission using an active transmitter.

For better understanding of embodiments of this application, a cellular passive internet of things related to this application is described.

Cellular internets of things are booming. For example, 3GPP has standardized internet of things technologies such as narrowband IoT (Narrow Band Internet of Things, NB-IoT), machine type communication (Machine Type Communication, MTC), and reduced capability (Reduced Capability, RedCap). However, internet of things communication requirements in many scenarios cannot be met by using existing technologies.

For example, a communication environment is harsh. Some internet of things scenarios may face extreme environments such as high temperature, extremely low temperature, high humidity, high pressure, high radiation, or high-speed movement, for example, ultra-high voltage substation, high-speed train track monitoring, high-cold environment monitoring, and industrial production line. In these scenarios, limited by a working environment of a conventional power supply, an existing Internet of Things terminal cannot work. In addition, extreme working environments are not conducive to internet of things maintenance, such as battery replacement.

For another example, a terminal form of an extremely small size is required. Some internet of things communication scenarios, such as food source tracing, commodity circulation, and intelligent wearables, require a terminal to have an extremely small size to facilitate use in these scenarios. For example, an Internet of Things terminal used for commodity management in a circulation link is usually embedded in a commodity package in a very small form in the form of an electronic tag. For another example, a lightweight wearable device may improve user experience while meeting a user requirement.

Another example is an extremely low cost internet of things communication requirement. Numerous internet of things communication scenarios require that costs of Internet of Things terminals be low enough, to improve competitiveness relative to other alternative technologies. For example, in a logistics or warehousing scenario, to facilitate management of a large number of circulating items, an Internet of Things terminal may be attached to each item, so as to implement accurate management of an entire logistics process and an entire logistics cycle through communication between the terminal and a logistics network. These scenarios require prices of Internet of Things terminals to be competitive enough.

Therefore, in order to cover these unmet internet of things communication requirements, a cellular network also requirements development of battery-free/maintenance-free Internets of things with ultra-low costs and extremely small sizes. A zero-power internet of things exactly can meet this requirement.

It should be additionally noted that the zero-power internet of things may also be referred to as ambient power-enabled internet of things (Ambient power enabled IoT), or ambient internet of things (Ambient IoT) for short. Specifically, the ambient internet of things device (Ambient IoT device) refers to an Internet of Things device (IoT device) that uses various ambient energy, such as radio frequency energy, solar energy, thermal energy, and mechanical energy. The ambient IoT device may have no or very limited energy storage capacity (for example, use of a capacitor with tens of microfarads ($\mu$F) capacity).

In some embodiments, the ambient IoT device may be used in at least the following four scenarios: object identification, such as logistics and production line product management, and supply chain management; environmental monitoring, such as temperature, humidity, and harmful gas monitoring of working environments and natural environments; positioning, such as indoor positioning, intelligent object searching, and product line object positioning; and intelligent control, such as intelligent control of various electrical appliances in smart homes (air conditioner turn-on/turn-off and temperature adjustment) and intelligent control of various facilities in agricultural greenhouses (automatic watering and fertilizing).

For better understanding of embodiments of this application, a problem to be resolved in this application is described.

As described above, in a future cellular passive Internet of Things or an ambient IoT, a new type of ambient IoT device can be supported in a cellular network, to meet a communication requirement of a corresponding type of Internet of Things in different application scenarios.

It is well known that in a conventional cellular network, a network provides a service for a terminal by deploying a cell. The terminal needs to search for a cell by using a cell search process, and then camps on a cell with good signal quality. When a service needs to be transmitted, the terminal initiates a random access procedure to establish a connection to the network. Cell search is a first step for obtaining a cellular network service by the terminal. UE can search for and find a suitable cell through cell search, and then access the cell. The cell search process is related to frequency scanning, cell detection, and broadcast information obtaining.

To support the terminal in completing cell search, a network device needs to send a synchronization signal and a broadcast channel (in particular, master information block (Master Information Block, MIB) information needs to be carried). For example, in an NR network, a gNB sends a synchronization signal/physical broadcast channel block (synchronization signal/physical broadcast channel block, SS/PBCH block) to a 5G terminal.

When the ambient IoT is supported in the cellular network, it is also necessary to consider how to support the ambient IoT device in performing cell search, especially, how to send a synchronization signal and a broadcast signal to the ambient IoT device.

Based on this, in consideration of a service characteristic of the ambient IoT device, a limitation of an Ambient IoT device capability, and a working power consumption limitation of the Ambient IoT device, this application provides a method for designing a synchronization signal and a broadcast channel of the ambient IoT device, so as to implement synchronization and/or broadcast for the ambient internet of things device. Specifically, deploying a cell based on a synchronization signal and a broadcast channel designed in this application may provide functions such as cell search, clock synchronization, system frame synchronization, cell ID obtaining, necessary parameter configuration, and cell measurement for the Ambient IoT device.

To facilitate understanding of the technical solutions in embodiments of this application, the following describes the technical solutions in this application in detail by using specific embodiments. The following related technologies, as optional solutions, may be randomly combined with the technical solutions in embodiments of this application, all of which fall within the protection scope of embodiments of this application. Embodiments of this application include at least part of the following content.

FIG. 11 is a schematic flowchart of a wireless communication method 200 according to an embodiment of this application. As shown in FIG. 11, the wireless communication method 200 may include at least part of following content:

S210: A communication device sends a synchronization signal and/or a broadcast channel to an ambient internet of things device.

S220: The ambient internet of things device receives the synchronization signal and/or the broadcast channel.

In this embodiment of this application, concepts of ambient internet of things device and zero-power device are equivalently interchangeable.

In some embodiments, the communication device is a network device (for example, a base station), or the communication device is an access point (access point, AP), or the communication device is a terminal device, or the communication device is a station (Station, STA), or the communication device is a relay device. Certainly, the communication device may alternatively be another device. This is not limited in this embodiment of this application.

For example, this embodiment of this application is applicable to a scenario in which a base station sends a synchronization signal and/or a broadcast channel to an ambient internet of things device (Ambient IoT device) (corresponding to a scenario in which the base station provides a service for the Ambient IoT device).

For another example, this embodiment of this application is applicable to a scenario in which an AP sends a synchronization signal and/or a broadcast channel to an ambient IoT device (corresponding to a scenario in which the AP provides a service for the Ambient IoT device).

For another example, this embodiment of this application is applicable to a scenario in which a terminal device (UE) sends a synchronization signal and/or a broadcast channel to an ambient IoT device (corresponding to a scenario in which the UE provides a service for the Ambient IoT device). Optionally, a resource used by the UE to send the synchronization signal and/or the broadcast channel to the ambient IoT device may be configured by the network device, and the resource may be different from a resource used by the base station to send the synchronization signal and/or the broadcast channel to the ambient IoT device.

For another example, this embodiment of this application is applicable to a scenario in which an STA sends a synchronization signal and/or a broadcast channel to an ambient IoT device (corresponding to a scenario in which the STA provides a service for the Ambient IoT device). Optionally, a resource used by the STA to send the synchronization signal and/or the broadcast channel to the ambient IoT device may be configured by the AP, and the resource may be different from a resource used by the AP to send the synchronization signal and/or the broadcast channel to the ambient IoT device.

For another example, this embodiment of this application is applicable to a scenario in which a relay device (relay) sends a synchronization signal and/or a broadcast channel to an ambient IoT device (corresponding to a scenario in which the relay provides a service for the Ambient IoT device).

It should be noted that the ambient IoT device has extremely low complexity (less than or far less than conventional cellular IoT terminals, such as NB-IoT terminals and MTC terminals), and extremely low power consumption (several microwatts ($\mu$w) to several milliwatts (mw)). Therefore, the design of the synchronization signal and/or the broadcast channel in this embodiment of this application requires consideration of requirements and characteristics of extremely low complexity and extremely low power consumption of ambient IoT devices.

It should be noted that, for the ambient IoT device, no matter whether RF or other ambient energy (such as light and heat) is used for energy supply, the energy supplied is very limited (considering a size of the ambient IoT device). Therefore, in this embodiment of this application, fast cell search, time-frequency synchronization, and system information reading need to be supported, so as to reduce power consumption of the ambient IoT device.

It should be noted that for some services, such as logistics, production line monitoring (a device flows on a production line), and warehousing inventory counting, an entire service communication process needs to be completed within a short time (for example, several seconds). During the whole process, the ambient IoT device may need to perform energy harvesting (if a network provides energy only when initiating a service), cell search, synchronization, connection establishment, and data transmission. Therefore, the cell search process also needs to be completed within an extremely short period of time. Therefore, the design of the synchronization signal and/or the broadcast channel in embodiments of this application requires consideration of a relatively stringent time requirement of this type of device.

For other services, such as environment monitoring, outdoor light and heat energy may be used. The ambient IoT device periodically sends data. This type of ambient IoT device may use ambient energy harvested during energy storage. Therefore, this type of ambient IoT device has a capability of periodically receiving synchronization signals and broadcast channels.

In some embodiments, a modulation scheme of the synchronization signal is the same as a modulation scheme of the broadcast channel, or a modulation scheme of the synchronization signal is different from a modulation scheme of the broadcast channel.

In some embodiments, a modulation waveform of the synchronization signal is amplitude shift keying (Amplitude Shift Keying, ASK), or a modulation waveform of the synchronization signal is on-off keying (On-Off Keying, OOK), or a modulation waveform of the synchronization signal is frequency shift keying (Frequency Shift Keying, FSK), or a modulated waveform of the synchronization signal is phase shift keying (Phase Shift Keying, PSK).

In some embodiments, a modulation waveform of the broadcast channel is ASK, or a modulation waveform of the broadcast channel is OOK, or a modulation waveform of the broadcast channel is FSK, or a modulation waveform of the broadcast channel is PSK.

Specifically, for example, in consideration of low complexity and low power consumption requirements of the ambient IoT device, preferably, the OOK waveform may be used for the synchronization signal and the broadcast channel of the ambient IoT device, that is, modulation of the synchronization signal and the broadcast information is implemented through amplitude modulation.

In some embodiments, a coding scheme of the synchronization signal is the same as a coding scheme of the broadcast channel, or a coding scheme of the synchronization signal is different from a coding scheme of the broadcast channel.

In some embodiments, the coding scheme of the synchronization signal includes one of the following: non-return-to-zero inverted coding, Manchester coding, unipolar return-to-zero coding, differential biphasic coding, Miller coding, or differential coding; and/or the coding scheme of the broadcast channel includes one of the following: non-return-to-zero inverted coding, Manchester coding, unipolar return-to-zero coding, differential biphasic coding, Miller coding, or differential coding.

For example, the synchronization signal uses unipolar return-to-zero (Unipolar RZ) coding, while the broadcast channel uses Mantester coding; or the synchronization signal uses NRZ coding, while the broadcast channel uses Mantester coding.

In some embodiments, when the ambient internet of things device receives the synchronization signal and the broadcast channel, the synchronization signal and the broadcast channel are carried through a beacon channel (Beacon channel).

In some embodiments, when the ambient internet of things device receives the synchronization signal and the broadcast channel, the synchronization signal and the broadcast channel are continuous in time domain, or the synchronization signal and the broadcast channel are non-continuous in time domain.

In some embodiments, in time domain, the synchronization signal is located before the broadcast channel, or the synchronization signal is located after the broadcast channel.

Specifically, for example, the beacon channel (Beacon channel) may be shown in FIG. 12. The synchronization signal and the broadcast channel of the ambient IoT device may be combined to form a beacon channel (Beacon channel) to be sent to the ambient IoT device. Alternatively, the synchronization signal and the broadcast channel may be separate (that is, independently transmitted and are not correlated with each other). The synchronization signal and the broadcast channel may be continuous or spaced in time domain. The synchronization signal may come first, and the broadcast channel may come next; or vice versa.

In some embodiments, when the ambient internet of things device receives the synchronization signal and the broadcast channel, the synchronization signal and the broadcast channel occupy a same bandwidth, or the synchronization signal and the broadcast channel occupy different bandwidths.

In some embodiments, when the synchronization signal and the broadcast channel occupy the same bandwidth, the bandwidth occupied by the synchronization signal or the broadcast channel is a part or all of a channel bandwidth of the ambient internet of things device.

In some embodiments, when the synchronization signal and the broadcast channel occupy different bandwidths, a bandwidth occupied by the synchronization signal is greater than a bandwidth occupied by the broadcast channel, or a bandwidth occupied by the broadcast channel is greater than a bandwidth occupied by the synchronization signal.

In some embodiments, when the bandwidth occupied by the synchronization signal is greater than the bandwidth occupied by the broadcast channel, the bandwidth occupied by the synchronization signal is the channel bandwidth of the ambient internet of things device.

In some embodiments, when the bandwidth occupied by the broadcast channel is greater than the bandwidth occupied by the synchronization signal, the bandwidth occupied by the broadcast channel is the channel bandwidth of the ambient internet of things device.

Specifically, for example, the synchronization signal and the broadcast channel may use a same bandwidth, and may occupy a channel bandwidth of the ambient IoT device, or may occupy a part of a channel bandwidth of the ambient IoT device. For example, if a channel bandwidth of the ambient IoT device is X MHz (for example, X = 1 or X = 0.2), the synchronization signal and the broadcast channel also occupy X MHz used by the channel bandwidth of the ambient IoT device. Alternatively, the synchronization signal and the broadcast channel occupy a bandwidth of Y MHz of X MHz, where Y < X. For example, Y MHz is located at a center of X MHz (that is, the synchronization signal and the broadcast channel are located in a center band of a channel bandwidth).

Specifically, for example, the synchronization signal and the broadcast channel may alternatively use different bandwidths. Optionally, a bandwidth used by the synchronization signal is greater than a bandwidth used by the broadcast channel. Optionally, the bandwidth occupied by the synchronization signal is the channel bandwidth of the ambient internet of things device.

Specifically, for example, the synchronization signal and the broadcast channel may alternatively use different bandwidths. Optionally, a bandwidth used by the synchronization signal is less than a bandwidth used by the broadcast channel. Optionally, the bandwidth occupied by the broadcast channel is the channel bandwidth of the ambient internet of things device.

In some embodiments, before the ambient internet of things device receives the synchronization signal and/or the broadcast channel, the ambient internet of things device receives a target signal, where the target signal is used to trigger the ambient internet of things device to detect the synchronization signal and/or the broadcast channel. Specifically, for example, before S210, the communication device sends the target signal to the ambient internet of things device, to trigger the ambient internet of things device to detect the synchronization signal and/or the broadcast channel.

Optionally, a frequency location for receiving the target signal is the same as or different from a frequency location for receiving the synchronization signal and/or the broadcast channel.

Specifically, for example, when the frequency location for receiving the target signal is the same as the frequency location for receiving the synchronization signal and/or the broadcast channel, the target signal and the synchronization signal or the broadcast channel are continuous in time domain.

In some embodiments, the target signal is a preset sequence.

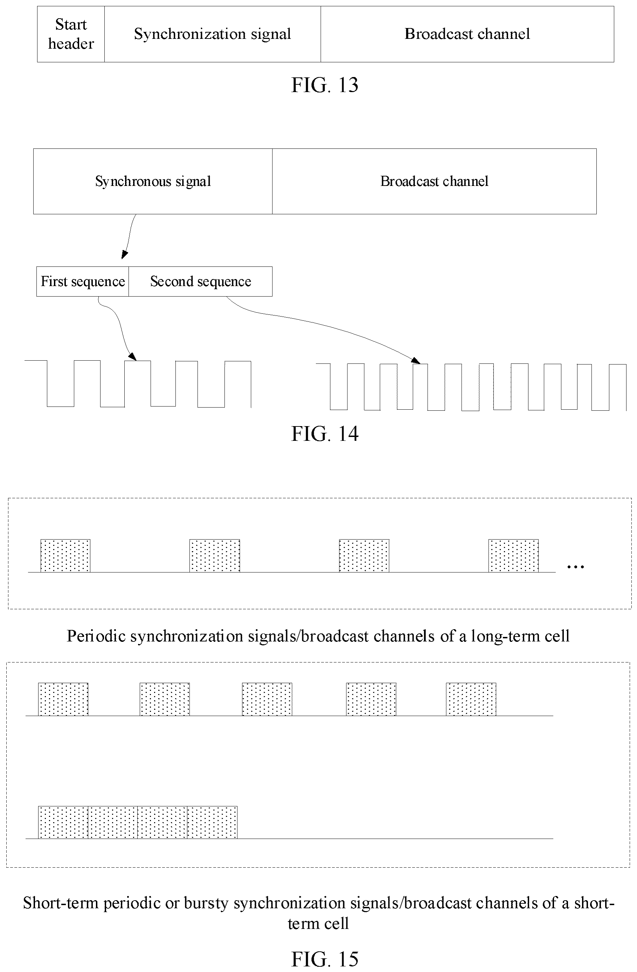

Specifically, for example, the target signal may be a pre-agreed sequence. The target signal is shorter than the synchronization signal. Therefore, it is easier to detect the target signal (for example, it takes a shorter time and consumes lower power). Therefore, the ambient IoT device may first detect the target signal, and after detecting the target signal, further detect the synchronization signal and/or the broadcast channel. Optionally, the target signal may be a start. Specifically, a signal/channel structure including a start, a synchronization signal, and a broadcast channel are shown in FIG. 13.

In some embodiments, a transmission period of the synchronization signal is agreed upon in a protocol, or a transmission period of the synchronization signal is indicated by using a synchronization signal; and/or a transmission period of the broadcast channel is agreed upon in a protocol, or a transmission period of the broadcast channel is indicated by using a broadcast channel.

In some embodiments, the ambient internet of things device corresponds to at least one ambient internet of things cell, where an ambient internet of things cell in the at least one ambient internet of things cell is deployed on a frequency band dedicated to the ambient internet of things device, or an ambient internet of things cell in the at least one ambient internet of things cell is deployed on a frequency band of a cellular network.

For example, when deploying a cellular ambient internet of things (Ambient IoT) cell, an operator may deploy one or more ambient IoT cells in frequency domain based on an actual capacity requirement. The ambient IoT cell may be deployed on a frequency band (Frequency band(s)) dedicated to an ambient IoT, or may be deployed on a frequency band used by another system (all or a part of available frequency bands of the frequency band used by the another system may be used), for example, may be deployed on a frequency band used by NR, or use a part of an NR frequency band, or use a part of frequency range within that part of the NR frequency band.

In some embodiments, the ambient internet of things device corresponds to at least one basic service set (Basic Service Set, BSS), where a BSS in the at least one BSS is deployed on a frequency band dedicated to the ambient internet of things device, or a BSS in the at least one BSS is deployed on a WLAN frequency band.

In some embodiments, for different service types, the ambient internet of things device uses different frequency bands. Specifically, for example, frequency bands used by the Ambient IoT may be different for different applications. For example, for a logistics application, a quantity of operating frequency bands used may be minimized (even a size of a frequency range in the operating band used may be reduced), to reduce time required for searching for an ambient IoT cells. In some logistics scenarios (for example, goods need to be circulated in a plurality of countries), the ambient IoT device needs to have a specific roaming capability. In this case, the ambient IoT device needs to support frequency bands that can be used in a plurality of countries.

In some embodiments, a frequency band used when the ambient internet of things device receives the synchronization signal and/or the broadcast channel is a target frequency band, where a candidate center frequency of the synchronization signal and/or the broadcast channel is a center frequency location of a part or all channels in the target frequency band.

In some embodiments, a quantity of times a synchronization signal is allowed to be continuously transmitted in a burst (burst) is agreed upon by a protocol, or a quantity of times a synchronization signal is allowed to be continuously transmitted in a burst (burst) is indicated by a synchronization signal; and/or a quantity of times a broadcast channel is allowed to be continuously transmitted in a burst (burst) is agreed upon in a protocol, or a quantity of times a broadcast channel is allowed to be continuously transmitted in a burst (burst) is indicated by using a broadcast channel.

In some embodiments, the synchronization signal is used to implement at least one of the following: clock synchronization of the ambient internet of things device, triggering the ambient internet of things device to detect the broadcast channel, carrying information about at least one ambient internet of things cell, indicating that an ambient internet of things cell exists, indicating whether an associated broadcast channel exists, obtaining symbol-level or slot-level timing, or radio resource management (Radio Resource Management, RRM) measurement.

In some embodiments, the synchronization signal is used to implement at least one of the following: clock synchronization of the ambient internet of things device, triggering the ambient internet of things device to detect the broadcast channel, carrying information about at least one basic service set (Basic Service Set, BSS), indicating that a BSS exists, indicating whether an associated broadcast channel exists, obtaining symbol-level or slot-level timing, or RRM measurement.

Specifically, the ambient IoT device has low complexity, it is difficult to maintain a stable clock, and clock extraction may be performed based on the synchronization signal.

Optionally, in order to implement clock synchronization of the ambient internet of things device (Ambient IoT device), the synchronization signal of the ambient IoT device lasts for a specific duration, and a specific rule may be employed when OOK is used. For example, when NRZ coding is used, regular switching such as 0, 1, 0, 1, 0, 1, ... may be used. If Manchester coding is used, a specific sequence can also be employed (because both bit 0 and bit 1 involve level changes). A quantity of bits of the synchronization signal and a time width of each bit (symbol) may be preset, or may be preconfigured (written in a specific storage area of the Ambient IoT device in advance).

Optionally, in order to implement clock synchronization of the ambient internet of things device (Ambient IoT device), the synchronization signal may include one or more sequences. When the synchronization signal includes a plurality of sequences, lengths of the plurality of sequences and time widths of bits may be different from each other, or some parameters may be the same. For example, the synchronization signal may include two sequences, where a time width of each bit of a first sequence that is earlier in terms of time is greater than a time width of each bit of a second sequence that is later in terms of time, and/or a length of a first sequence that is earlier in terms of time is less than a length of a second sequence that is later in terms of time. For example, as shown in FIG. 14, the ambient IoT device may complete coarse time synchronization based on the first sequence in advance, and complete finer time synchronization based on the second sequence.

Specifically, the ambient internet of things device (Ambient IoT device) first receives the synchronization signal, where the received synchronization signal can trigger the ambient internet of things device (Ambient IoT device) to detect the broadcast channel.

In some embodiments, the information about the at least one ambient internet of things cell includes but is not limited to at least one of the following: an identity of an ambient internet of things cell, partial information of an identity of an ambient internet of things cell, a service type of an ambient internet of things cell, or a synchronization signal transmission period and/or a broadcast channel transmission period of an ambient internet of things cell.

Optionally, the partial information of the identity of the ambient internet of things cell may be a result of the identity of the ambient internet of things cell modulo $Y_1$. For example, $Y_1 = 3$.

Optionally, different service types correspond to different configuration durations of the ambient internet of things cell. Specifically, for example, a configuration duration of the ambient internet of things cell corresponding to a first service type is greater than or equal to a first threshold, and a configuration duration of the ambient internet of things cell corresponding to a second service type is less than a second threshold. A service of the first service type includes at least one of the following: industrial inspection, environment monitoring; and/or a service of the second service type is a burst service or a service enabled on demand. Optionally, for a burst service, one burst is allowed to include one or more synchronization signal transmission periods, and/or one burst is allowed to include one or more broadcast channel transmission periods. Optionally, for a burst service, a plurality of times of continuous transmission of a synchronization signal is allowed in one burst, and/or a plurality of times of continuous transmission of a broadcast channel is allowed in one burst.

One type of ambient internet of things (Ambient IoT) cell may exist for a long time (referred to as a long-term cell). For example, in ambient IoT applications for industrial inspection and environment monitoring, once the ambient IoT cell is deployed, it may operate continuously for hours, days, weeks, or even months (except for occasional overhauls or equipment upgrades). Synchronization signals and broadcast channels of this type of ambient IoT cell may be periodically transmitted in time domain. In order to enable the ambient IoT device to perform downlink synchronization or read broadcast information at any time, periods of the synchronization signal and the broadcast channel may be indicated in the broadcast channel or the synchronization signal.

Another type of ambient internet of things (Ambient IoT) cell may exist for a short time (referred to as short-term cell), mainly for burst services or on-demand services (such as logistics or asset counting). Tasks for enabling this type of cell are related tasks (such as counting and positioning operations) needing to be completed within a short period of time. For this type of cell, its synchronization signal and broadcast channel may be transmitted based on bursts in time domain. A burst (burst) may include one or more transmission periods of synchronization signals and broadcast channels (the period may be the same as that of a first type of cell, or different (generally shorter)); or a plurality of times of continuous transmission of a synchronization signal and a broadcast channel are allowed in a burst. Optionally, periods of the synchronization signal and the broadcast channel are agreed upon by a protocol, or periods of the synchronization signal and the broadcast channel are indicated by the broadcast channel or the synchronization signal; and/or a burst duration and/or a quantity of consecutive transmissions of the synchronization signal and the broadcast channel within the burst may be pre-agreed upon, or indicated by the broadcast channel or the synchronization signal.

Specifically, for example, transmission of the synchronization signal/broadcast channel in time domain may be shown in FIG. 15.

In some embodiments, the information about the at least one BSS includes at least one of the following: an identity of a BSS, partial information of an identity of a BSS, a service type of a BSS, or a synchronization signal transmission period and/or a broadcast channel transmission period of a BSS.

Optionally, the partial information of the identity of the BSS cell may be a result of the identity of the BSS modulo $Y_2$. For example, $Y_2 = 3$.

Optionally, different service types correspond to different configuration durations of the BSS.

One type of BSS may exist for a long time (referred to as a long-term BSS). For example, in ambient IoT applications for industrial inspection and environment monitoring, once the BSS is deployed, it may operate continuously for hours, days, weeks, or even months (except for occasional overhauls or equipment upgrades). Synchronization signals and broadcast channels of this type of BSS cell may be periodically transmitted in time domain. In order to enable the ambient IoT device to perform downlink synchronization or read broadcast information at any time, periods of the synchronization signal and the broadcast channel may be indicated in the broadcast channel or the synchronization signal.

Another type of BSS may exist for a short time (referred to as short-term BSS), mainly for burst services or on-demand services (such as logistics or asset counting). Tasks for enabling this type of BSS are related tasks (such as counting and positioning operations) needing to be completed within a short period of time. For this type of BSS, its synchronization signal and broadcast channel may be transmitted based on bursts in time domain. A burst (burst) may include one or more transmission periods of synchronization signals and broadcast channels (the period may be the same as that of a first type of cell, or different (generally shorter)); or a plurality of times of continuous transmission of a synchronization signal and a broadcast channel are allowed in a burst. Optionally, periods of the synchronization signal and the broadcast channel are agreed upon by a protocol, or periods of the synchronization signal and the broadcast channel are indicated by the broadcast channel or the synchronization signal; and/or a burst duration and/or a quantity of consecutive transmissions of the synchronization signal and the broadcast channel within the burst may be pre-agreed upon, or indicated by the broadcast channel or the synchronization signal.

Specifically, in order to carry this information (that is, the information about the at least one ambient internet of things cell or the information about the at least one BSS), the synchronization signal includes a specific coding sequence (if an appropriate coding scheme is used (for example, 0 or 1, or both include level transition)), and can still provide a synchronization function while carrying information.

For example, to represent 504 different cells, 9 bits need to be used, and to represent 1008 different cells, 10 bits need to be used. In order to represent four different synchronization signal/broadcast signal periods of 10ms/20ms/40/80ms, two bits are required.

The synchronization signal may be used to send a fixed sequence first in advance, that is, the synchronization signal does not carry the foregoing information (that is, the information about the at least one ambient internet of things cell or the information about the at least one BSS), and the fixed sequence is followed by a sequence carrying the foregoing information (that is, the information about the at least one ambient internet of things cell or the information about the at least one BSS). In this way, the ambient IoT device may detect presence of the synchronization signal based on the fixed sequence. After the fixed sequence is detected, the sequence carrying information is further detected, thereby reducing detection complexity.

Specifically, the synchronization signal may be used to indicate that an ambient internet of things cell exists. For example, the synchronization signal may be used to indicate presence of an ambient IoT cell (corresponding to the synchronization signal, a broadcast signal may be associated subsequently). Once detecting existence of the synchronization signal, the ambient internet of things device (ambient IoT device) may determine presence or possible presence of an ambient IoT cell (which may be further determined based on detection of a subsequent broadcast signal).

Specifically, the synchronization signal may be used to indicate whether an associated broadcast channel exists. Some synchronization signals may be used only for ambient internet of things device (ambient IoT device) synchronization. Some other synchronization signals may be used for synchronization of other channels. Therefore, in order to distinguish whether the synchronization signal is associated with a broadcast signal, an indication is needed. This function may be implemented by using a specific sequence value or a specific bit (one bit is enough) in a sequence.

Specifically, the synchronization signal may be used to obtain symbol-level or slot-level timing. A symbol location for sending the synchronization signal is preset, or even a slot in which the synchronization signal is located is preset. Therefore, by detecting the synchronization signal, the ambient internet of things device (ambient IoT device) can obtain symbol-level timing (that is, each symbol time location in each slot in time domain) and even slot-level timing (that is, a time location of each slot in time domain).

Specifically, the synchronization signal may be used for RRM measurement. That is, the synchronization signal may also be used by the ambient IoT device for RRM measurement, to obtain signal strength, signal quality, and the like of the cell.

In some embodiments, the broadcast channel is configured to implement at least one of the following: carrying an SFN, carrying system bandwidth information, carrying an identity of an ambient internet of things cell or an identity of a BSS, access control, or carrying a first system configuration.

Specifically, the broadcast channel is used to carry a system frame number (system frame number, SFN). The ambient internet of things device (ambient IoT device) needs to obtain information about a system frame, so as to obtain distribution of the system frame in terms of time, so that the terminal can determine time locations of some time-related operations (such as periodic data sending, periodic data receiving, paging monitoring, and random access).

Specifically, the broadcast channel is used to carry system bandwidth information. For example, when the system can flexibly configure a bandwidth, a system bandwidth may be carried in the broadcast channel, for example, 180 kHz(0.180MHz) or 360 kHz.

In some embodiments, the first system configuration includes but is not limited to at least one of the following: a transmission period configuration of a synchronization signal, a transmission period configuration of a broadcast channel, or a random access configuration.

In some embodiments, the first system configuration is carried by using bits in the broadcast channel, or the first system configuration is carried by using a scrambling code obtained after encoding of the broadcast channel; or the first system configuration is carried by using cyclic redundancy check (Cyclical Redundancy Check, CRC) check bits corresponding to the broadcast channel.

In this embodiment of this application, the synchronization signal and/or the broadcast channel may be placed at a center frequency location of each channel.

In some embodiments, a center frequency F corresponding to the synchronization signal and/or the broadcast channel is determined based on the following Formula 1:

$$F = Q + X*n + X/2, n = 0, 1, 2, \dots \qquad \text{Formula 1}$$

where Q represents a starting frequency of a lowest-frequency channel, and X represents a channel bandwidth.

That an ambient IoT uses a frequency band n8 is taken as an example. The frequency band n8 is a frequency division duplex (Frequency Division Duplex, FDD) frequency band, with a downlink (downlink, DL) band of 35 MHz (925 MHz to 960 MHz) and an uplink (uplink, UL) band of 35 MHz (880 MHz to 915 MHz). For example, X = 0.180 MHz (equal to a bandwidth of one PRB whose NR subcarrier is 15 KHz), or X = 0.360 MHz (equal to a bandwidth of one PRB whose NR subcarrier is 30 KHz), or X = 0.200 MHz (equal to a channel bandwidth of GSM), or X = 0.250 MHz (equal to a channel bandwidth of RFID), or X = 1.4 MHz...

Specifically, for example, the synchronization signal and the broadcast channel may be transmitted on each channel of the frequency band n8. One channel is distributed every X=0.180 MHz. It is assumed that a starting point of a first lowest-frequency channel is a starting point 925 MHz of the frequency band. In the foregoing Formula 1, the center frequency F of the synchronization signal and/or the broadcast channel is: 925 + X*n + X/2, n = 0, 1, 2, ... (a channel bandwidth corresponding to a highest center frequency with a largest value of N is still within a range from 925 MHz to 960 MHz).

In some embodiments, a center frequency F corresponding to the synchronization signal and/or the broadcast channel is determined based on the following Formula 2:

$$F = Q + channel\_offset*X + X*n + X/2, n = 0, 1, 2, \dots \qquad \text{Formula 2}$$

where Q represents a starting frequency of a lowest-frequency channel, channel_offset represents a channel offset, and X represents a channel bandwidth.

That an ambient IoT uses a frequency band n8 is taken as an example. Specifically, for example, in the frequency band n8, the synchronization signal and the broadcast channel may be transmitted on each channel that is subsequent to channel_offset channels after the first lowest-frequency channel. One channel is distributed every X=0.180 MHz. It is assumed that the starting point of the first lowest-frequency channel is a starting point 925 MHz of the frequency band plus channel_offset. In the foregoing Formula 2, the center frequency F of the synchronization signal and/or the broadcast channel is: 925 + channel_offset*X + X*n + X/2, n = 0, 1, 2, ... (a channel bandwidth corresponding to a highest center frequency with a largest value of N is still within a range from 925 MHz to 960 MHz).

In some embodiments, a center frequency F corresponding to the synchronization signal and/or the broadcast channel is determined based on the following Formula 3:

$$F = Q + X*n*M + X/2, n = 0, 1, 2, \dots \qquad \text{Formula 3}$$

where Q represents a starting frequency of a lowest-frequency channel, X represents a channel bandwidth, M represents a channel spacing, and M is a positive integer.

Specifically, in the foregoing Formula 3, deploying the synchronous signal and the broadcast channel at intervals can reduce workload of searching in frequency by the ambient IoT device, thereby reducing search time.

That an ambient IoT uses a frequency band n8 is taken as an example. Specifically, for example, in the frequency band n8, the synchronization signal and the broadcast channel may be transmitted on every M channels starting from the first lowest-frequency channel. One channel is distributed every X=0.180 MHz. It is assumed that a starting point of the first lowest-frequency channel is a starting point 925 MHz of the frequency band. However, one cell may be deployed every M channels (M = 3). In the foregoing Formula 3, the center frequency F of the synchronization signal and/or the broadcast channel is: 925 + X*n*M + X/2, n = 0, 1, 2, ... (a channel bandwidth corresponding to a highest center frequency with a largest value of N is still within a range from 925 MHz to 960 MHz).

In some embodiments, a center frequency F corresponding to the synchronization signal and/or the broadcast channel is determined based on the following Formula 4:

$$F = Q + channel\_offset*X + X*n*M + X/2, n = 0, 1, 2, \dots \qquad \text{Formula 4}$$

where Q represents a starting frequency of a lowest-frequency channel, channel_offset represents a channel offset, X represents a channel bandwidth, M represents a channel spacing, and M is a positive integer.

Specifically, in the foregoing Formula 4, deploying the synchronous signal and the broadcast channel at intervals can reduce workload of searching in frequency by the ambient IoT device, thereby reducing search time.

That an ambient IoT uses a frequency band n8 is taken as an example. Specifically, for example, in the frequency band n8, the synchronization signal and the broadcast channel may be transmitted on every M channels that are subsequent to channel_offset channels after the first lowest-frequency channel. One channel is distributed every X=0.180 MHz. It is assumed that a starting point of the first lowest-frequency channel is a starting point 925 MHz of the frequency band plus channel_offset. However, one cell may be deployed every M channels (M = 3). In the foregoing Formula 4, the center frequency F of the synchronization signal and/or the broadcast channel is: 925 + channel_offset*X + X*n*M + X/2, n = 0, 1, 2, ... (a channel bandwidth corresponding to a highest center frequency with a largest value of N is still within a range from 925 MHz to 960 MHz).

In some embodiments, for a scenario that requires a short access delay, such as logistics, to speed up searching for a synchronization signal and a broadcast channel, a subset of center frequencies determined in Formula 1 to Formula 4 may be used for a synchronization signal and a broadcast channel of a corresponding cell.

In some embodiments, in the foregoing Formula 3 and/or Formula 4, for different service types, M have different values. Optionally, a value of M for a delay-sensitive service is greater than a value of M for a non-delay-sensitive service. For example, for a non-delay-sensitive service, M = 3; for a delay-sensitive service, a value of M is 9.

In some embodiments, a center frequency F corresponding to the synchronization signal and/or the broadcast channel is determined based on the following Formula 5:

$$F = Q + X*n*M*L + X/2, \, n = 0, 1, 2, ... \hspace{2cm} \text{Formula 5}$$

where Q represents a starting frequency of a lowest-frequency channel, X represents a channel bandwidth, M represents a channel spacing, different service types correspond to different values of L, and both M and L are positive integers.

In some embodiments, a center frequency F corresponding to the synchronization signal and/or the broadcast channel is determined based on the following Formula 6:

$$F = Q + X*n*M + X/2, \, n = N\_start + 0, \, N\_start + 1, \, N\_start + 2, ... \hspace{1cm} \text{Formula 6}$$

where Q represents a starting frequency of a lowest-frequency channel, X represents a channel bandwidth, N_start represents a starting frequency, M represents a channel spacing, and M is a positive integer.

In some embodiments, a center frequency F corresponding to the synchronization signal and/or the broadcast channel is determined based on the following Formula 7:

$$F = Q + channel\_offset*X + X*n*M*L + X/2, \, n = 0, 1, 2, … \hspace{1cm} \text{Formula 7}$$

where Q represents a starting frequency of a lowest-frequency channel, channel_offset represents a channel offset, X represents a channel bandwidth, M represents a channel spacing, different service types correspond to different values of L, and both M and L are positive integers.

In some embodiments, a center frequency F corresponding to the synchronization signal and/or the broadcast channel is determined based on the following Formula 8:

$$F = Q + channel\_offset * X + X * n * M + X/2, \, n = N\_start + 0, \, N\_start + 1, \, N\_start + 2, ... \hspace{1cm} \text{Formula 8}$$

where Q represents a starting frequency of a lowest-frequency channel, channel_offset represents a channel offset, X represents a channel bandwidth, M represents a channel spacing, N_start represents a starting frequency, and M is a positive integer.

It should be noted that, in Formula 6 and Formula 8, N_start may alternatively be replaced with an end frequency N_end of the synchronization signal and/or the broadcast channel. This is not limited in embodiments of this application.

In some embodiments, a value of X is agreed upon in a protocol, or a value of X is configured by a network device, or a value of X is preconfigured by using subscription information of the ambient internet of things device.

In some embodiments, a value of M is agreed upon in a protocol, or a value of M is configured by a network device, or a value of M is preconfigured by using subscription information of the ambient internet of things device.

In some embodiments, a value of L is agreed upon in a protocol, or a value of L is configured by a network device, or a value of L is preconfigured by using subscription information of the ambient internet of things device.

In some embodiments, a value of N_start is agreed upon in a protocol, or a value of N_start is configured by a network device, or a value of N_start is preconfigured by using subscription information of the ambient internet of things device.

That is, the parameters in the foregoing formula, such as X, M, L, N_start, N_end, a synchronization signal of a specific service, or a broadcast channel center frequency set may be pre-agreed upon, or may be preconfigured by using subscription information of the ambient IoT device (for example, when the ambient IoT device is delivered, parameter values are written into a specific storage area of the ambient IoT device in advance based on a target service scenario), or some parameters are pre-agreed upon and other parameters are pre-configured.

In some embodiments, a center frequency used when the ambient internet of things device receives the synchronization signal and/or the broadcast channel belongs to a first center frequency set. Optionally, the first center frequency set includes a plurality of center frequency subsets, and different center frequency subsets are for different service types.

In some embodiments, the first center frequency set is agreed upon in a protocol, or the first center frequency set is configured by a network device, or the first center frequency set is preconfigured by using subscription information of the ambient internet of things device.

In other words, in this embodiment of this application, searching for a synchronization signal and a broadcast channel used by a specific type of service may be directly agreed upon. A synchronization signal and/or a broadcast channel of a corresponding cell may use a center frequency set determined in Formula 1 to Formula 8.

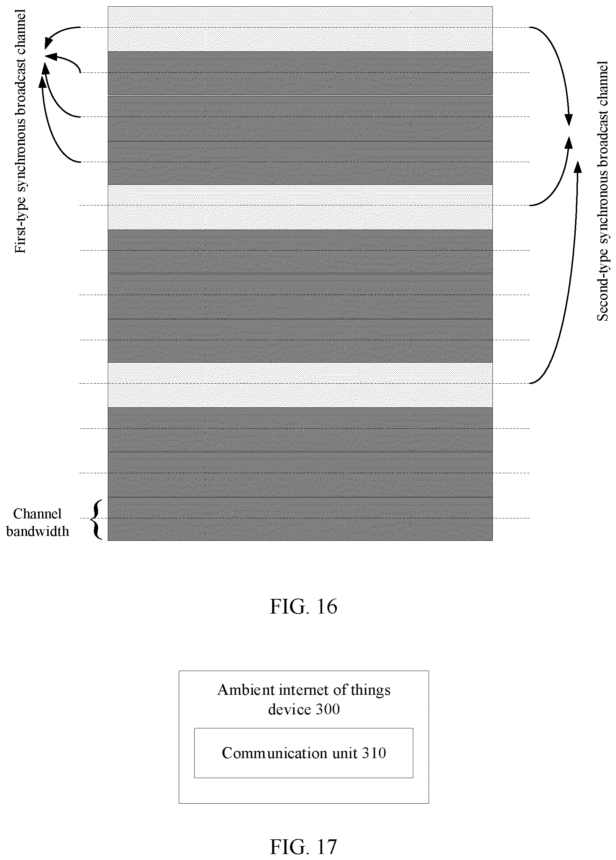

Specifically, different synchronization signal and broadcast channel center frequency sets may be set. Based on different service types, service characteristics, requirements, and the like, an appropriate center frequency set may be selected to deploy an ambient IoT cell. For example, FIG. 16 separately shows a first-type synchronous broadcast channel and a second-type synchronous broadcast channel.

It should be noted that in this embodiment of this application, a DL frequency at which a synchronization signal and broadcast channel center frequency is located is mainly used as an example for description. For an FDD frequency band such as n8, a frequency corresponding to an uplink channel is calculated based on a channel spacing (n8 is 45 MHz) between DL and UL channels in the FDD frequency band. Certainly, the frequency band may alternatively be another frequency band. Specifically, for example, in FR1, available NR frequency bands may be shown in Table 1.

Table 1

| NR operating band | Uplink (UL) operating band BS receive/UE transmit $F_{UL\_low}$ - $F_{UL\_high}$ | Downlink (DL) operating band BS transmit/UE receive $F_{DL\_low}$ - $F_{DL\_high}$ | Duplex Mode |
|---|---|---|---|
| n1 | 1920 MHz - 1980 MHz | 2110 MHz - 2170 MHz | FDD |
| n2 | 1850 MHz - 1910 MHz | 1930 MHz - 1990 MHz | FDD |
| n3 | 1710 MHz - 1785 MHz | 1805 MHz - 1880 MHz | FDD |
| n5 | 824 MHz - 849 MHz | 869 MHz - 894 MHz | FDD |
| n7 | 2500 MHz - 2570 MHz | 2620 MHz - 2690 MHz | FDD |
| n8 | 880 MHz - 915 MHz | 925 MHz - 960 MHz | FDD |
| n12 | 699 MHz - 716 MHz | 729 MHz - 746 MHz | FDD |
| n14 | 788 MHz - 798 MHz | 758 MHz - 768 MHz | FDD |
| n18 | 815 MHz - 830 MHz | 860 MHz - 875 MHz | FDD |
| n20 | 832 MHz - 862 MHz | 791 MHz - 821 MHz | FDD |
| n25 | 1850 MHz - 1915 MHz | 1930 MHz - 1995 MHz | FDD |
| n26 | 814 MHz - 849 MHz | 859 MHz - 894 MHz | FDD |
| n28 | 703 MHz - 748 MHz | 758 MHz - 803 MHz | FDD |
| n29 | N/A | 717 MHz - 728 MHz | SDL |
| n30[3] | 2305 MHz - 2315 MHz | 2350 MHz - 2360 MHz | FDD |
| n34 | 2010 MHz - 2025 MHz | 2010 MHz - 2025 MHz | TDD |
| n38[10] | 2570 MHz - 2620 MHz | 2570 MHz - 2620 MHz | TDD |
| n39 | 1880 MHz - 1920 MHz | 1880 MHz - 1920 MHz | TDD |
| n40 | 2300 MHz - 2400 MHz | 2300 MHz - 2400 MHz | TDD |
| n41 | 2496 MHz - 2690 MHz | 2496 MHz - 2690 MHz | TDD |
| n47[11] | 5855 MHz - 5925 MHz | 5855 MHz - 5925 MHz | TDD[10] |
| n48 | 3550 MHz - 3700 MHz | 3550 MHz - 3700 MHz | TDD |

(continued)

| NR operating band | Uplink (UL) operating band BS receive/UE transmit $F_{UL\_low}$ - $F_{UL\_high}$ | Downlink (DL) operating band BS transmit/UE receive $F_{DL\_low}$ - $F_{DL\_high}$ | Duplex Mode |
|---|---|---|---|
| n50 | 1432 MHz - 1517 MHz | 1432 MHz - 1517 MHz | TDD[1] |
| n51 | 1427 MHz - 1432 MHz | 1427 MHz - 1432 MHz | TDD |
| n53 | 2483.5 MHz - 2495 MHz | 2483.5 MHz - 2495 MHz | TDD |
| n65 | 1920 MHz - 2010 MHz | 2110 MHz - 2200 MHz | FDD[4] |
| n66 | 1710 MHz - 1780 MHz | 2110 MHz - 2200 MHz | FDD |
| n70 | 1695 MHz - 1710 MHz | 1995 MHz - 2020 MHz | FDD |
| n71 | 663 MHz - 698 MHz | 617 MHz - 652 MHz | FDD |
| n74 | 1427 MHz - 1470 MHz | 1475 MHz - 1518 MHz | FDD |
| n75 | N/A | 1432 MHz - 1517 MHz | SDL |
| n76 | N/A | 1427 MHz - 1432 MHz | SDL |
| n77[12] | 3300 MHz - 4200 MHz | 3300 MHz - 4200 MHz | TDD |
| n78 | 3300 MHz - 3800 MHz | 3300 MHz - 3800 MHz | TDD |
| n79 | 4400 MHz - 5000 MHz | 4400 MHz - 5000 MHz | TDD |
| n80 | 1710 MHz - 1785 MHz | N/A | SUL |
| n81 | 880 MHz - 915 MHz | N/A | SUL |
| n82 | 832 MHz - 862 MHz | N/A | SUL |
| n83 | 703 MHz - 748 MHz | N/A | SUL |
| n84 | 1920 MHz - 1980 MHz | N/A | SUL |
| n86 | 1710 MHz - 1780 MHz | N/A | SUL |
| n89 | 824 MHz - 849 MHz | N/A | SUL |
| n90 | 2496 MHz - 2690 MHz | 2496 MHz - 2690 MHz | TDD[5] |
| n91 | 832 MHz - 862 MHz | 1427 MHz - 1432 MHz | FDD[9] |
| n92 | 832 MHz - 862 MHz | 1432 MHz - 1517 MHz | FDD[9] |
| n93 | 880 MHz - 915 MHz | 1427 MHz - 1432 MHz | FDD[9] |
| n94 | 880 MHz - 915 MHz | 1432 MHz - 1517 MHz | FDD[9] |
| n95[8] | 2010 MHz - 2025 MHz | N/A | SUL |
| * | | | |

Therefore, in this embodiment of this application, synchronization and/or broadcast for an ambient internet of things device can be implemented. Specifically, deploying a cell based on a synchronization signal and a broadcast channel designed in this application may provide functions such as cell search, clock synchronization, system frame synchronization, cell ID obtaining, necessary parameter configuration, and cell measurement for the Ambient IoT device.

The foregoing describes method embodiments of this application in detail with reference to FIG. 11 to FIG. 16. The following describes apparatus embodiments of this application in detail with reference to FIG. 17 to FIG. 21. It should be understood that the apparatus embodiments correspond to the method embodiments. For similar descriptions, reference is made to the method embodiments.

FIG. 17 is a schematic block diagram of an ambient internet of things device 300 according to an embodiment of this application. As shown in FIG. 17, the ambient internet of things device 300 includes: a communication unit 310, configured to receive a synchronization signal and/or a broadcast channel.

In some embodiments, a coding scheme of the synchronization signal is the same as a coding scheme of the broadcast channel, or a coding scheme of the synchronization signal is different from a coding scheme of the broadcast channel; and/or a modulation scheme of the synchronization signal is the same as a modulation scheme of the broadcast channel, or a modulation scheme of the synchronization signal is different from a modulation scheme of the broadcast channel.

In some embodiments, the coding scheme of the synchronization signal includes one of the following: non-return-to-zero inverted coding, Manchester coding, unipolar return-to-zero coding, differential biphasic coding, Miller coding, or differential coding; and/or the coding scheme of the broadcast channel includes one of the following: non-return-to-zero inverted coding, Manchester coding, unipolar return-to-zero coding, differential biphasic coding, Miller coding, or differential coding.

In some embodiments, a modulation waveform of the synchronization signal is amplitude shift keying ASK, or a modulation waveform of the synchronization signal is on-off keying OOK, or a modulation waveform of the synchronization signal is frequency shift keying FSK, or a modulation waveform of the synchronization signal is phase shift keying PSK; and/or a modulation waveform of the broadcast channel is ASK, or a modulation waveform of the broadcast channel is OOK, or a modulation waveform of the broadcast channel is FSK, or a modulation waveform of the broadcast channel is PSK.

In some embodiments, when the ambient internet of things device receives the synchronization signal and the broadcast channel, the synchronization signal and the broadcast channel are carried through a beacon channel.

In some embodiments, when the ambient internet of things device receives the synchronization signal and the broadcast channel, the synchronization signal and the broadcast channel are continuous in time domain, or the synchronization signal and the broadcast channel are non-continuous in time domain.

In some embodiments, in time domain, the synchronization signal is located before the broadcast channel, or the synchronization signal is located after the broadcast channel.

In some embodiments, when the ambient internet of things device receives the synchronization signal and the broadcast channel, the synchronization signal and the broadcast channel occupy a same bandwidth, or the synchronization signal and the broadcast channel occupy different bandwidths.

In some embodiments, when the synchronization signal and the broadcast channel occupy the same bandwidth, the bandwidth occupied by the synchronization signal or the broadcast channel is a part or all of a channel bandwidth of the ambient internet of things device.

In some embodiments, when the synchronization signal and the broadcast channel occupy different bandwidths, a bandwidth occupied by the synchronization signal is greater than a bandwidth occupied by the broadcast channel, or a bandwidth occupied by the broadcast channel is greater than a bandwidth occupied by the synchronization signal.

In some embodiments, when the bandwidth occupied by the synchronization signal is greater than the bandwidth occupied by the broadcast channel, the bandwidth occupied by the synchronization signal is the channel bandwidth of the ambient internet of things device; or when the bandwidth occupied by the broadcast channel is greater than the bandwidth occupied by the synchronization signal, the bandwidth occupied by the broadcast channel is the channel bandwidth of the ambient internet of things device.

In some embodiments, before the ambient internet of things device receives the synchronization signal and/or the broadcast channel, the communication unit 310 is further configured to receive a target signal, where the target signal is used to trigger the ambient internet of things device to detect the synchronization signal and/or the broadcast channel.

In some embodiments, the target signal is a preset sequence.

In some embodiments, the ambient internet of things device corresponds to at least one ambient internet of things cell, where an ambient internet of things cell in the at least one ambient internet of things cell is deployed on a frequency band dedicated to the ambient internet of things device. an ambient internet of things cell in the at least one ambient internet of things cell is deployed on a frequency band of a cellular network; or the ambient internet of things device corresponds to at least one basic service set BSS, where a BSS in the at least one BSS is deployed on a frequency band dedicated to the ambient internet of things device, or a BSS in the at least one BSS is deployed on a wireless local area network WLAN frequency band.

In some embodiments, for different service types, the ambient internet of things device uses different frequency bands.

In some embodiments, a frequency band used when the ambient internet of things device receives the synchronization signal and/or the broadcast channel is a target frequency band; and a candidate center frequency of the synchronization signal and/or the broadcast channel is a center frequency location of a part or all of channels in the target frequency band.

In some embodiments, a center frequency F corresponding to the synchronization signal and/or the broadcast channel is determined based on the following formula:

$$F = Q + X*n + X/2, n = 0, 1, 2, \ldots,$$

where Q represents a starting frequency of a lowest-frequency channel, and X represents a channel bandwidth.

In some embodiments, a center frequency F corresponding to the synchronization signal and/or the broadcast channel is determined based on the following formula:

$$F = Q + \text{channel\_offset} * X + X * n + X/2, \, n = 0, 1, 2, \ldots,$$

where Q represents a starting frequency of a lowest-frequency channel, channel_offset represents a channel offset, and X represents a channel bandwidth.

In some embodiments, a center frequency F corresponding to the synchronization signal and/or the broadcast channel is determined based on the following formula:

$$F = Q + X * n * M + X/2, \, n = 0, 1, 2, \ldots,$$

where Q represents a starting frequency of a lowest-frequency channel, X represents a channel bandwidth, M represents a channel spacing, and M is a positive integer.

In some embodiments, a center frequency F corresponding to the synchronization signal and/or the broadcast channel is determined based on the following formula:

$$F = Q + \text{channel\_offset} * X + X * n * M + X/2, \, n = 0, 1, 2, \ldots,$$

where Q represents a starting frequency of a lowest-frequency channel, channel_offset represents a channel offset, X represents a channel bandwidth, M represents a channel spacing, and M is a positive integer.

In some embodiments, for different service types, M have different values.

In some embodiments, a value of M for a delay-sensitive service is greater than a value of M for a non-delay-sensitive service.

In some embodiments, a center frequency F corresponding to the synchronization signal and/or the broadcast channel is determined based on the following formula:

$$F = Q + X * n * M * L + X/2, \, n = 0, 1, 2, \ldots,$$

where Q represents a starting frequency of a lowest-frequency channel, X represents a channel bandwidth, M represents a channel spacing, different service types correspond to different values of L, and both M and L are positive integers.

In some embodiments, a center frequency F corresponding to the synchronization signal and/or the broadcast channel is determined based on the following formula:

$$F = Q + X * n * M + X/2, \, n = N\_start + 0, N\_start + 1, N\_start + 2, \ldots,$$

where Q represents a starting frequency of a lowest-frequency channel, X represents a channel bandwidth, M represents a channel spacing, N_start represents a starting frequency, and M is a positive integer.

In some embodiments, a center frequency F corresponding to the synchronization signal and/or the broadcast channel is determined based on the following formula:

$$F = Q + \text{channel\_offset} * X + X * n * M * L + X/2, \, n = 0, 1, 2, \ldots,$$

where Q represents a starting frequency of a lowest-frequency channel, channel_offset represents a channel offset, M represents a channel spacing, X represents a channel bandwidth, different service types correspond to different values of L, and both M and L are positive integers.

In some embodiments, a center frequency F corresponding to the synchronization signal and/or the broadcast channel is determined based on the following formula:

$$F = Q + \text{channel\_offset} * X + X * n * M + X/2, \, n = N\_start + 0, N\_start + 1, N\_start + 2, \ldots,$$

where Q represents a starting frequency of a lowest-frequency channel, channel_offset represents a channel offset, X represents a channel bandwidth, M represents a channel spacing, N_start represents a starting frequency, and M is a positive integer.

In some embodiments, a value of X is agreed upon in a protocol, or a value of X is configured by a network device, or a value of X is preconfigured by using subscription information of the ambient internet of things device.

In some embodiments, a value of M is agreed upon in a protocol, or a value of M is configured by a network device, or a value of M is preconfigured by using subscription information of the ambient internet of things device.

In some embodiments, a value of L is agreed upon in a protocol, or a value of L is configured by a network device, or a value of L is preconfigured by using subscription information of the ambient internet of things device.

In some embodiments, a value of N_start is agreed upon in a protocol, or a value of N_start is configured by a network device, or a value of N_start is preconfigured by using subscription information of the ambient internet of things device.

In some embodiments, a center frequency used when the ambient internet of things device receives the synchronization signal and/or the broadcast channel belongs to a first center frequency set.

In some embodiments, the first center frequency set includes a plurality of center frequency subsets, and different center frequency subsets are for different service types.

In some embodiments, the first center frequency set is agreed upon in a protocol, or the first center frequency set is configured by a network device, or the first center frequency set is preconfigured by using subscription information of the ambient internet of things device.

In some embodiments, a transmission period of the synchronization signal is agreed upon in a protocol, or a transmission period of the synchronization signal is indicated by using a synchronization signal; and/or a transmission period of the broadcast channel is agreed upon in a protocol, or a transmission period of the broadcast channel is indicated by using a broadcast channel; or a quantity of times a synchronization signal is allowed to be continuously transmitted in a burst is agreed upon by a protocol, or a quantity of times a synchronization signal is allowed to be continuously transmitted in a burst is indicated by a synchronization signal; and/or a quantity of times a broadcast channel is allowed to be continuously transmitted in a burst is agreed upon in a protocol, or a quantity of times a broadcast channel is allowed to be continuously transmitted in a burst is indicated by using a broadcast channel.

In some embodiments, the synchronization signal is used to implement at least one of the following: clock synchronization of the ambient internet of things device, triggering the ambient internet of things device to detect the broadcast channel, carrying information about at least one ambient internet of things cell, indicating that an ambient internet of things cell exists, indicating whether an associated broadcast channel exists, obtaining symbol-level or slot-level timing, or radio resource management RRM measurement; or the synchronization signal is used to implement at least one of the following: clock synchronization of the ambient internet of things device, triggering the ambient internet of things device to detect the broadcast channel, carrying information about at least one BSS, indicating that a BSS exists, indicating whether an associated broadcast channel exists, obtaining symbol-level or slot-level timing, or RRM measurement.

In some embodiments, the information about the at least one ambient internet of things cell includes at least one of the following: an identity of an ambient internet of things cell, partial information of an identity of an ambient internet of things cell, a service type of an ambient internet of things cell, or a synchronization signal transmission period and/or a broadcast channel transmission period of an ambient internet of things cell.

In some embodiments, the information about the at least one BSS includes at least one of the following: an identity of a BSS, partial information of an identity of a BSS, a service type of a BSS, or a synchronization signal transmission period and/or a broadcast channel transmission period of a BSS.

In some embodiments, the broadcast channel is configured to implement at least one of the following: carrying a system frame number SFN, carrying system bandwidth information, carrying an identity of an ambient internet of things cell or an identity of a BSS, access control, or carrying a first system configuration.

In some embodiments, the first system configuration includes at least one of the following: a transmission period configuration of a synchronization signal, a transmission period configuration of a broadcast channel, or a random access configuration.

In some embodiments, the first system configuration is carried by using bits in the broadcast channel, or the first system configuration is carried by using a scrambling code obtained after encoding of the broadcast channel; or the first system configuration is carried by using cyclic redundancy check CRC check bits corresponding to the broadcast channel.

In some embodiments, the foregoing communication unit may be a communication interface or a transceiver, or an input/output interface of a communication chip or a system on chip. The processing unit may be one or more processors.

It should be understood that the ambient internet of things device 300 according to this embodiment of this application may correspond to a zero-power device in the method embodiments of this application, and the foregoing and other operations and/or functions of units in the ambient internet of things device 300 are used to implement a corresponding procedure of the ambient internet of things device in the method 200 shown in FIG. 11. For brevity, details are not described herein again.

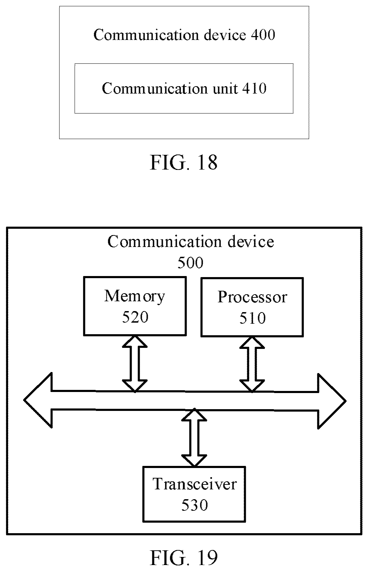

FIG. 18 is a schematic block diagram of a communication device 400 according to an embodiment of this application. As shown in FIG. 18, the communication device 400 includes: a communication unit 410, configured to send a synchronization signal and/or a broadcast channel to an ambient internet of things device.

In some embodiments, a coding scheme of the synchronization signal is the same as a coding scheme of the broadcast channel, or a coding scheme of the synchronization signal is different from a coding scheme of the broadcast channel; and/or a modulation scheme of the synchronization signal is the same as a modulation scheme of the broadcast channel, or a modulation scheme of the synchronization signal is different from a modulation scheme of the broadcast channel.

In some embodiments, the coding scheme of the synchronization signal includes one of the following: non-return-to-zero inverted coding, Manchester coding, unipolar return-to-zero coding, differential biphasic coding, Miller coding, or differential coding; and/or the coding scheme of the broadcast channel includes one of the following: non-return-to-zero inverted coding, Manchester coding, unipolar return-to-zero coding, differential biphasic coding, Miller coding, or differential coding.

In some embodiments, a modulation waveform of the synchronization signal is amplitude shift keying ASK, or a modulation waveform of the synchronization signal is on-off keying OOK, or a modulation waveform of the synchronization signal is frequency shift keying FSK, or a modulation waveform of the synchronization signal is phase shift keying PSK; and/or a modulation waveform of the broadcast channel is ASK, or a modulation waveform of the broadcast channel is OOK, or a modulation waveform of the broadcast channel is FSK, or a modulation waveform of the broadcast channel is PSK.

In some embodiments, when the communication device sends the synchronization signal and the broadcast channel, the synchronization signal and the broadcast channel are carried through a beacon channel.

In some embodiments, when the communication device sends the synchronization signal and the broadcast channel, the synchronization signal and the broadcast channel are continuous in time domain, or the synchronization signal and the broadcast channel are non-continuous in time domain.

In some embodiments, in time domain, the synchronization signal is located before the broadcast channel, or the synchronization signal is located after the broadcast channel.

In some embodiments, when the communication device sends the synchronization signal and the broadcast channel, the synchronization signal and the broadcast channel occupy a same bandwidth, or the synchronization signal and the broadcast channel occupy different bandwidths.

In some embodiments, when the synchronization signal and the broadcast channel occupy the same bandwidth, the bandwidth occupied by the synchronization signal or the broadcast channel is a part or all of a channel bandwidth of the ambient internet of things device.

In some embodiments, when the synchronization signal and the broadcast channel occupy different bandwidths, a bandwidth occupied by the synchronization signal is greater than a bandwidth occupied by the broadcast channel, or a bandwidth occupied by the broadcast channel is greater than a bandwidth occupied by the synchronization signal.

In some embodiments, when the bandwidth occupied by the synchronization signal is greater than the bandwidth occupied by the broadcast channel, the bandwidth occupied by the synchronization signal is the channel bandwidth of the ambient internet of things device; or when the bandwidth occupied by the broadcast channel is greater than the bandwidth occupied by the synchronization signal, the bandwidth occupied by the broadcast channel is the channel bandwidth of the ambient internet of things device.

In some embodiments, before the communication device sends the synchronization signal and/or the broadcast channel, the communication unit 410 is further configured to send a target signal to the ambient internet of things device, where the target signal is used to trigger the ambient internet of things device to detect the synchronization signal and/or the broadcast channel.

In some embodiments, the target signal is a preset sequence.

In some embodiments, the ambient internet of things device corresponds to at least one ambient internet of things cell, where an ambient internet of things cell in the at least one ambient internet of things cell is deployed on a frequency band dedicated to the ambient internet of things device. an ambient internet of things cell in the at least one ambient internet of things cell is deployed on a frequency band of a cellular network; or the ambient internet of things device corresponds to at least one basic service set BSS, where a BSS in the at least one BSS is deployed on a frequency band dedicated to the ambient internet of things device, or a BSS in the at least one BSS is deployed on a wireless local area network WLAN frequency band.

In some embodiments, for different service types, the ambient internet of things device uses different frequency bands.

In some embodiments, a frequency band used when the ambient internet of things device receives the synchronization signal and/or the broadcast channel is a target frequency band; and a candidate center frequency of the synchronization signal and/or the broadcast channel is a center frequency location of a part or all of channels in the target frequency band.

In some embodiments, a center frequency F corresponding to the synchronization signal and/or the broadcast channel is determined based on the following formula:

$$F = Q + X*n + X/2, n = 0, 1, 2, \ldots,$$

where Q represents a starting frequency of a lowest-frequency channel, and X represents a channel bandwidth.

In some embodiments, a center frequency F corresponding to the synchronization signal and/or the broadcast channel is determined based on the following formula:

$$F = Q + channel\_offset*X + X*n + X/2, n = 0, 1, 2, \ldots,$$

where Q represents a starting frequency of a lowest-frequency channel, channel_offset represents a channel offset, and X represents a channel bandwidth.

In some embodiments, a center frequency F corresponding to the synchronization signal and/or the broadcast channel is determined based on the following formula:

$$F = Q + X*n*M + X/2, n = 0, 1, 2, \ldots,$$

where Q represents a starting frequency of a lowest-frequency channel, X represents a channel bandwidth, M represents a channel spacing, and M is a positive integer.

In some embodiments, a center frequency F corresponding to the synchronization signal and/or the broadcast channel is determined based on the following formula:

$$F = Q + channel\_offset*X + X*n*M + X/2, n = 0, 1, 2, \ldots,$$

where Q represents a starting frequency of a lowest-frequency channel, channel_offset represents a channel offset, X represents a channel bandwidth, M represents a channel spacing, and M is a positive integer.

In some embodiments, for different service types, M have different values.

In some embodiments, a value of M for a delay-sensitive service is greater than a value of M for a non-delay-sensitive service.

In some embodiments, a center frequency F corresponding to the synchronization signal and/or the broadcast channel is determined based on the following formula:

$$F = Q + X*n*M*L + X/2, n = 0, 1, 2, \ldots,$$

where Q represents a starting frequency of a lowest-frequency channel, X represents a channel bandwidth, M represents a channel spacing, different service types correspond to different values of L, and both M and L are positive integers.

In some embodiments, a center frequency F corresponding to the synchronization signal and/or the broadcast channel is determined based on the following formula:

$$F = Q + X*n*M + X/2, n = N\_start + 0, N\_start + 1, N\_start + 2, \ldots,$$

where Q represents a starting frequency of a lowest-frequency channel, X represents a channel bandwidth, N_start represents a starting frequency, M represents a channel spacing, and M is a positive integer.

In some embodiments, a center frequency F corresponding to the synchronization signal and/or the broadcast channel is determined based on the following formula:

$$F = Q + channel\_offset*X + X*n*M*L + X/2, n = 0, 1, 2, \ldots,$$

where Q represents a starting frequency of a lowest-frequency channel, channel_offset represents a channel offset, X represents a channel bandwidth, M represents a channel spacing, different service types correspond to different values of L, and both M and L are positive integers.

In some embodiments, a center frequency F corresponding to the synchronization signal and/or the broadcast channel is determined based on the following formula:

$$F = Q + channel\_offset*X + X*n*M + X/2, n = N\_start + 0, N\_start + 1, N\_start + 2, \ldots,$$

where Q represents a starting frequency of a lowest-frequency channel, channel_offset represents a channel offset, X represents a channel bandwidth, M represents a channel spacing, N_start represents a starting frequency, and M is a positive integer.

In some embodiments, a value of X is agreed upon in a protocol, or a value of X is configured by a network device, or a value of X is preconfigured by using subscription information of the ambient internet of things device.

In some embodiments, a value of M is agreed upon in a protocol, or a value of M is configured by a network device, or a value of M is preconfigured by using subscription information of the ambient internet of things device.

In some embodiments, a value of L is agreed upon in a protocol, or a value of L is configured by a network device, or a value of L is preconfigured by using subscription information of the ambient internet of things device.

In some embodiments, a value of N_start is agreed upon in a protocol, or a value of N_start is configured by a network device, or a value of N_start is preconfigured by using subscription information of the ambient internet of things device.

In some embodiments, a center frequency used when the ambient internet of things device receives the synchronization signal and/or the broadcast channel belongs to a first center frequency set.

In some embodiments, the first center frequency set includes a plurality of center frequency subsets, and different center frequency subsets are for different service types.

In some embodiments, the first center frequency set is agreed upon in a protocol, or the first center frequency set is configured by a network device, or the first center frequency set is preconfigured by using subscription information of the ambient internet of things device.

In some embodiments, a transmission period of the synchronization signal is agreed upon in a protocol, or a transmission period of the synchronization signal is indicated by using a synchronization signal; and/or a transmission period of the broadcast channel is agreed upon in a protocol, or a transmission period of the broadcast channel is indicated by using a broadcast channel; or a quantity of times a synchronization signal is allowed to be continuously transmitted in a burst is agreed upon by a protocol, or a quantity of times a synchronization signal is allowed to be continuously transmitted in a burst is indicated by a synchronization signal; and/or a quantity of times a broadcast channel is allowed to be continuously transmitted in a burst is agreed upon in a protocol, or a quantity of times a broadcast channel is allowed to be continuously transmitted in a burst is indicated by using a broadcast channel.

In some embodiments, the synchronization signal is used to implement at least one of the following: clock synchronization of the ambient internet of things device, triggering the ambient internet of things device to detect the broadcast channel, carrying information about at least one ambient internet of things cell, indicating that an ambient internet of things cell exists, indicating whether an associated broadcast channel exists, obtaining symbol-level or slot-level timing, or radio resource management RRM measurement; or the synchronization signal is used to implement at least one of the following: clock synchronization of the ambient internet of things device, triggering the ambient internet of things device to detect the broadcast channel, carrying information about at least one BSS, indicating that a BSS exists, indicating whether an associated broadcast channel exists, obtaining symbol-level or slot-level timing, or RRM measurement.

In some embodiments, the information about the at least one ambient internet of things cell includes at least one of the following: an identity of an ambient internet of things cell, partial information of an identity of an ambient internet of things cell, a service type of an ambient internet of things cell, or a synchronization signal transmission period and/or a broadcast channel transmission period of an ambient internet of things cell.

In some embodiments, the information about the at least one BSS includes at least one of the following: an identity of a BSS, partial information of an identity of a BSS, a service type of a BSS, or a synchronization signal transmission period and/or a broadcast channel transmission period of a BSS.

In some embodiments, the broadcast channel is configured to implement at least one of the following: carrying a system frame number SFN, carrying system bandwidth information, carrying an identity of an ambient internet of things cell or an identity of a BSS, access control, or carrying a first system configuration.

In some embodiments, the first system configuration includes at least one of the following: a transmission period configuration of a synchronization signal, a transmission period configuration of a broadcast channel, or a random access configuration.

In some embodiments, the first system configuration is carried by using bits in the broadcast channel, or the first system configuration is carried by using a scrambling code obtained after encoding of the broadcast channel; or the first system configuration is carried by using cyclic redundancy check CRC check bits corresponding to the broadcast channel.

In some embodiments, the communication device is a network device, or the communication device is an access point AP, or the communication device is a terminal device, or the communication device is a station STA, or the communication device is a relay device.

In some embodiments, the foregoing communication unit may be a communication interface or a transceiver, or an input/output interface of a communication chip or a system on chip. The processing unit may be one or more processors.

It should be understood that the communication device 400 according to this embodiment of this application may correspond to a communication device in the method embodiments of this application, and the foregoing and other operations and/or functions of units in the communication device 400 are used to implement a corresponding procedure of the communication device in the method 200 shown in FIG. 11. For brevity, details are not described herein again.

FIG. 19 is a schematic structural diagram of a communication device 500 according to an embodiment of this application. The communication device 500 shown in FIG. 19 includes a processor 510, and the processor 510 may invoke a computer program from a memory and run the computer program to implement the methods in embodiments of this application.

In some embodiments, as shown in FIG. 19, the communication device 500 may further include a memory 520. The processor 510 may invoke a computer program from the memory 520 and run the computer program to implement the methods in embodiments of this application.

The memory 520 may be a separate component independent of the processor 510, or may be integrated into the processor 510.

In some embodiments, as shown in FIG. 19, the communication device 500 may further include a transceiver 530. The processor 510 may control the transceiver 530 to communicate with another device. Specifically, the processor 510 may transmit information or data to the another device, or receive information or data transmitted by the another device.

The transceiver 530 may include a transmitter and a receiver. The transceiver 530 may further include an antenna, and there may be one or more antennas.

In some embodiments, the processor 510 may implement a function of a processing unit in the ambient internet of things device, or the processor 510 may implement a function of a processing unit in the communication device 400. For brevity, details are not described herein again.

In some embodiments, the transceiver 530 may implement a function of a communication unit in the ambient internet of things device. For brevity, details are not described herein again.

In some embodiments, the transceiver 530 may implement a function of a communication unit in the communication device 400. For brevity, details are not described herein again.

In some embodiments, the communication device 500 may be specifically the communication device in embodiments of this application, and the communication device 500 may implement a corresponding procedure implemented by the communication device in the methods in embodiments of this application. For brevity, details are not described herein again.

In some embodiments, the communication device 500 may be specifically the ambient internet of things device in embodiments of this application, and the communication device 500 may implement a corresponding procedure implemented by the ambient internet of things device in the methods in embodiments of this application. For brevity, details are not described herein again.

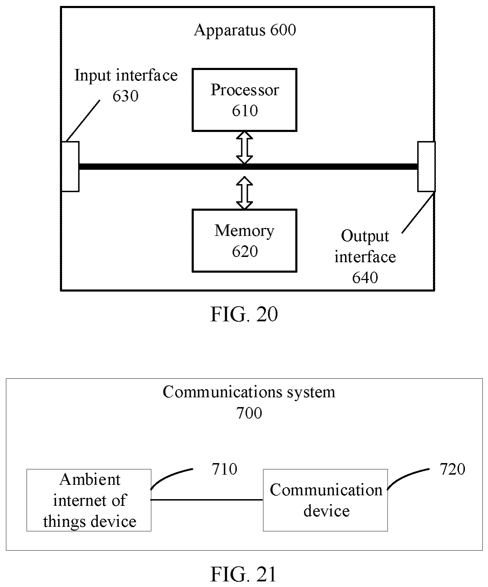

FIG. 20 is a schematic structural diagram of an apparatus according to an embodiment of this application. The apparatus 600 shown in FIG. 20 includes a processor 610, and the processor 610 may invoke a computer program from a memory and run the computer program to implement the methods in embodiments of this application.

In some embodiments, as shown in FIG. 20, the apparatus 600 may further include a memory 620. The processor 610 may invoke a computer program from the memory 620 and run the computer program to implement the methods in embodiments of this application.

The memory 620 may be a separate component independent of the processor 610, or may be integrated into the processor 610.

In some embodiments, the processor 610 may implement a function of a processing unit in the ambient internet of things device, or the processor 610 may implement a function of a processing unit in the communication device 400. For brevity, details are not described herein again.

In some embodiments, the apparatus 600 may further include an input interface 630. The processor 610 may control the input interface 630 to communicate with another device or chip, and specifically, may acquire information or data transmitted by the another device or chip. Optionally, the processor 610 may be on or off a chip.

In some embodiments, the input interface 630 may implement a function of a communication unit in the ambient internet of things device, or the input interface 630 may implement a function of a communication unit in the communication device 400.

In some embodiments, the apparatus 600 may further include an output interface 640. The processor 610 may control the output interface 640 to communicate with another device or chip, and specifically, may output information or data to the another device or chip. Optionally, the processor 610 may be on or off a chip.

In some embodiments, the output interface 640 may implement a function of a communication unit in the ambient internet of things device, or the output interface 640 may implement a function of a communication unit in the communication device.

In some embodiments, the apparatus may be applied to the communication device in embodiments of this application, and the apparatus may implement a corresponding procedure implemented by the communication device in the methods in embodiments of this application. For brevity, details are not described herein again.

In some embodiments, the apparatus may be applied to the ambient internet of things device in embodiments of this application; and the apparatus may implement a corresponding procedure implemented by the ambient internet of things device in methods in embodiments of this application. For brevity, details are not described herein again.

In some embodiments, the apparatus in embodiments of this application may also be a chip, for example, may be a system-level chip, a system chip, a chip system, or a system-on-chip, or the like.

FIG. 21 is a schematic block diagram of a communications system 700 according to an embodiment of this application. As shown in FIG. 21, the communications system 700 includes an ambient internet of things device 710 and a communication device 720.

The ambient internet of things device 710 may be configured to implement a corresponding function implemented by the ambient internet of things device in the foregoing method, and the communication device 720 may be configured to implement a corresponding function implemented by the communication device in the foregoing method. For brevity, details are not described herein again.

It should be understood that, the processor in embodiments of this application may be an integrated circuit chip having a signal processing capability. In an implementation process, the steps in the foregoing method embodiments may be implemented by using an integrated hardware logic circuit of the processor or instructions in a software form. The processor may be a general-purpose processor, a digital signal processor (Digital Signal Processor, DSP), an application-specific integrated circuit (Application Specific Integrated Circuit, ASIC), a field-programmable gate array (Field Programmable Gate Array, FPGA) or another programmable logic device, a discrete gate or a transistor logic device, or a discrete hardware component. The processor may implement or execute the methods, steps, and logical block diagrams disclosed in embodiments of this application. The general-purpose processor may be a microprocessor, or the processor may be any conventional processor or the like. The steps of the methods disclosed with reference to embodiments of this application may be directly completed by a hardware decoding processor, or may be completed by a combination of hardware and software modules in a decoding processor. The software module may be located in a mature storage medium in the art, for example, a random access memory, a flash memory, a read-only memory, a programmable read-only memory, an electrically erasable programmable memory, or a register. The storage medium is located in a memory. The processor reads information from the memory, and completes the steps of the foregoing methods in combination with hardware in the processor.

It may be understood that the memory in embodiments of this application may be a volatile memory or a non-volatile memory, or may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), and is used as an external cache. By way of example rather than limitative description, many forms of RAMs are available, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DR RAM). It should be noted that, the memory in the systems and methods described in this specification includes but is not limited to these memories and any memory of another proper type.

It should be understood that the memory is merely an example but not limitative description. For example, the memory in embodiments of this application may alternatively be a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synch link DRAM, SLDRAM), a direct rambus random access memory (Direct Rambus RAM, DR RAM), or the like. In other words, the memory in embodiments of this application includes but is not limited to these memories and any memory of another proper type.

An embodiment of this application further provides a computer-readable storage medium, configured to store a computer program.

In some embodiments, the computer-readable storage medium may be applied to the communication device in embodiments of this application, and the computer program causes a computer to execute a corresponding procedure implemented by the communication device in the methods in embodiments of this application. For brevity, details are not described herein again.

In some embodiments, the computer-readable storage medium may be applied to the ambient internet of things device in embodiments of this application; and the computer program causes a computer to execute a corresponding procedure implemented by the ambient internet of things device in the methods in embodiments of this application. For brevity, details are not described herein again.

An embodiment of this application further provides a computer program product, including computer program instructions.

In some embodiments, the computer program product may be applied to the communication device in embodiments of this application, and the computer program instructions cause a computer to execute a corresponding procedure implemented by the communication device in the methods in embodiments of this application. For brevity, details are not described herein again.

In some embodiments, the computer program product may be applied to the ambient internet of things device in embodiments of this application; and the computer program instructions cause a computer to execute a corresponding procedure implemented by the ambient internet of things device in the methods in embodiments of this application. For brevity, details are not described herein again.

An embodiment of this application further provides a computer program.

In some embodiments, the computer program may be applied to the communication device in embodiments of this application. When the computer program runs on a computer, the computer is enabled to execute a corresponding procedure implemented by the communication device in the methods in embodiments of this application. For brevity, details are not described herein again.

In some embodiments, the computer program may be applied to the ambient internet of things device in embodiments of this application. When the computer program runs on a computer, the computer is enabled to execute a corresponding procedure implemented by the ambient internet of things device in the methods in embodiments of this application. For brevity, details are not described herein again.

A person of ordinary skill in the art may be aware that, units and algorithm steps in examples described in combination with the embodiments disclosed in this specification can be implemented by electronic hardware or a combination of computer software and electronic hardware. Whether the functions are performed by hardware or software depends on particular applications and design constraints of the technical solutions. A person skilled in the art may use different methods to implement the described functions for each specific application, but it should not be considered that the implementation goes beyond the scope of this application.

It may be clearly understood by a person skilled in the art that, for the purpose of convenient and brief description, for a detailed working process of the foregoing system, apparatus, and unit, reference may be made to corresponding processes in the foregoing method embodiments, and details are not described herein again.

In several embodiments provided in this application, it should be understood that the disclosed system, apparatus, and method may be implemented in another manner. For example, the described apparatus embodiments are merely examples. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented as indirect couplings or communication connections through some interfaces, apparatus or units, and may be implemented in electronic, mechanical, or other forms.

The units described as separate parts may be or may not be physically separate, and parts displayed as units may be or may not be physical units, and may be at one location, or may be distributed on a plurality of network elements. Some or all of the units may be selected according to actual requirements to achieve the objective of the solutions of embodiments.

In addition, function units in embodiments of this application may be integrated into one processing unit, or each of the units may exist alone physically, or two or more units may be integrated into one unit.

When the functions are implemented in a form of a software function unit and sold or used as an independent product, the functions may be stored in a computer-readable storage medium. For such understanding, the essence of the technical solutions of this application or the part contributing to the prior art, or some of the technical solutions may be represented in the form of software products. The computer software products are stored in a storage medium, and include a number of instructions to enable a computer device (which may be a personal computer, a server, a network device, or the like) to perform all or some of the steps of the methods described in various embodiments of this application. The foregoing storage medium includes various media that may store a program code, such as a USB flash drive, a removable hard disk, a read-only memory (Read-only Memory, ROM), a random access memory (Random Access Memory, RAM), a magnetic disk, or an optical disc.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application should be subject to the protection scope of the claims.

**Claims**

1. A wireless communication method, comprising:
   receiving, by an ambient internet of things device, a synchronization signal and/or a broadcast channel.

2. The method according to claim 1, wherein

   a coding scheme of the synchronization signal is the same as a coding scheme of the broadcast channel, or a coding scheme of the synchronization signal is different from a coding scheme of the broadcast channel; and/or a modulation scheme of the synchronization signal is the same as a modulation scheme of the broadcast channel, or a modulation scheme of the synchronization signal is different from a modulation scheme of the broadcast channel.

3. The method according to claim 2, wherein

   the coding scheme of the synchronization signal comprises one of the following: non-return-to-zero inverted coding, Manchester coding, unipolar return-to-zero coding, differential biphasic coding, Miller coding, or differential coding; and/or
   the coding scheme of the broadcast channel comprises one of the following: non-return-to-zero inverted coding, Manchester coding, unipolar return-to-zero coding, differential biphasic coding, Miller coding, or differential coding.

4. The method according to claim 2, wherein

   a modulation waveform of the synchronization signal is amplitude shift keying ASK, or a modulation waveform of the synchronization signal is on-off keying OOK, or a modulation waveform of the synchronization signal is frequency shift keying FSK, or a modulation waveform of the synchronization signal is phase shift keying PSK; and/or
   a modulation waveform of the broadcast channel is ASK, or a modulation waveform of the broadcast channel is OOK, or a modulation waveform of the broadcast channel is FSK, or a modulation waveform of the broadcast channel is PSK.

5. The method according to any one of claims 1 to 4, wherein when the ambient internet of things device receives the synchronization signal and the broadcast channel, the synchronization signal and the broadcast channel are carried through a beacon channel.

6. The method according to any one of claims 1 to 5, wherein
   when the ambient internet of things device receives the synchronization signal and the broadcast channel, the synchronization signal and the broadcast channel are continuous in time domain, or the synchronization signal and the broadcast channel are non-continuous in time domain.

7. The method according to claim 6, wherein
   in time domain, the synchronization signal is located before the broadcast channel, or the synchronization signal is located after the broadcast channel.

8. The method according to any one of claims 1 to 7, wherein
   when the ambient internet of things device receives the synchronization signal and the broadcast channel, the synchronization signal and the broadcast channel occupy a same bandwidth, or the synchronization signal and the broadcast channel occupy different bandwidths.

9. The method according to claim 8, wherein
   when the synchronization signal and the broadcast channel occupy the same bandwidth, the bandwidth occupied by the synchronization signal or the broadcast channel is a part or all of a channel bandwidth of the ambient internet of things device.

10. The method according to claim 8, wherein
    when the synchronization signal and the broadcast channel occupy different bandwidths, a bandwidth occupied by the synchronization signal is greater than a bandwidth occupied by the broadcast channel, or a bandwidth occupied by the broadcast channel is greater than a bandwidth occupied by the synchronization signal.

11. The method according to claim 10, wherein

when the bandwidth occupied by the synchronization signal is greater than the bandwidth occupied by the broadcast channel, the bandwidth occupied by the synchronization signal is the channel bandwidth of the ambient internet of things device; or
when the bandwidth occupied by the broadcast channel is greater than the bandwidth occupied by the synchronization signal, the bandwidth occupied by the broadcast channel is the channel bandwidth of the ambient internet of things device.

12. The method according to any one of claims 1 to 11, wherein before the receiving, by the ambient internet of things device, the synchronization signal and/or the broadcast channel, the method further comprises:

receiving, by the ambient internet of things device, a target signal, wherein
the target signal is used to trigger the ambient internet of things device to detect the synchronization signal and/or the broadcast channel.

13. The method according to claim 12, wherein the target signal is a preset sequence.

14. The method according to any one of claims 1 to 13, wherein

the ambient internet of things device corresponds to at least one ambient internet of things cell, wherein an ambient internet of things cell in the at least one ambient internet of things cell is deployed on a frequency band dedicated to the ambient internet of things device, or an ambient internet of things cell in the at least one ambient internet of things cell is deployed on a frequency band of a cellular network; or
the ambient internet of things device corresponds to at least one basic service set BSS, wherein a BSS in the at least one BSS is deployed on a frequency band dedicated to the ambient internet of things device, or a BSS in the at least one BSS is deployed on a wireless local area network WLAN frequency band.

15. The method according to claim 14, wherein
for different service types, the ambient internet of things device uses different frequency bands.

16. The method according to claim 15, wherein

a frequency band used when the ambient internet of things device receives the synchronization signal and/or the broadcast channel is a target frequency band; and
a candidate center frequency of the synchronization signal and/or the broadcast channel is a center frequency location of a part or all of channels in the target frequency band.

17. The method according to any one of claims 1 to 16, wherein

a center frequency F corresponding to the synchronization signal and/or the broadcast channel is determined based on the following formula:

$$F = Q + X*n + X/2, \ n = 0, 1, 2, \ldots,$$

wherein Q represents a starting frequency of a lowest-frequency channel, and X represents a channel bandwidth.

18. The method according to any one of claims 1 to 16, wherein

a center frequency F corresponding to the synchronization signal and/or the broadcast channel is determined based on the following formula:

$$F = Q + channel\_offset*X + X*n + X/2, \ n = 0, 1, 2, \ldots,$$

wherein Q represents a starting frequency of a lowest-frequency channel, channel_offset represents a channel offset, and X represents a channel bandwidth.

19. The method according to any one of claims 1 to 16, wherein

a center frequency F corresponding to the synchronization signal and/or the broadcast channel is determined based on the following formula:

$$F = Q + X*n*M + X/2, n = 0, 1, 2, \ldots,$$

wherein Q represents a starting frequency of a lowest-frequency channel, X represents a channel bandwidth, M represents a channel spacing, and M is a positive integer.

20. The method according to any one of claims 1 to 16, wherein

a center frequency F corresponding to the synchronization signal and/or the broadcast channel is determined based on the following formula:

$$F = Q + channel\_offset*X + X*n*M + X/2, n = 0, 1, 2, \ldots,$$

wherein Q represents a starting frequency of a lowest-frequency channel, channel_offset represents a channel offset, X represents a channel bandwidth, M represents a channel spacing, and M is a positive integer.

21. The method according to claim 19 or 20, wherein
for different service types, M have different values.

22. The method according to claim 21, wherein
a value of M for a delay-sensitive service is greater than a value of M for a non-delay-sensitive service.

23. The method according to any one of claims 1 to 16, wherein

a center frequency F corresponding to the synchronization signal and/or the broadcast channel is determined based on the following formula:

$$F = Q + X*n*M*L + X/2, n = 0, 1, 2, \ldots,$$

wherein Q represents a starting frequency of a lowest-frequency channel, X represents a channel bandwidth, M represents a channel spacing, different service types correspond to different values of L, and both M and L are positive integers.

24. The method according to any one of claims 1 to 16, wherein

a center frequency F corresponding to the synchronization signal and/or the broadcast channel is determined based on the following formula:

$$F = Q + X*n*M + X/2, n = N\_start + 0, N\_start + 1, N\_start + 2, \ldots,$$

wherein Q represents a starting frequency of a lowest-frequency channel, X represents a channel bandwidth, M represents a channel spacing, N_start represents a starting frequency, and M is a positive integer.

25. The method according to any one of claims 1 to 16, wherein

a center frequency F corresponding to the synchronization signal and/or the broadcast channel is determined based on the following formula:

$$F = Q + channel\_offset*X + X*n*M*L + X/2, n = 0, 1, 2, \ldots,$$

wherein Q represents a starting frequency of a lowest-frequency channel, channel_offset represents a channel offset, M represents a channel spacing, X represents a channel bandwidth, different service types correspond to different values of L, and both M and L are positive integers.

26. The method according to any one of claims 1 to 16, wherein

a center frequency F corresponding to the synchronization signal and/or the broadcast channel is determined based on the following formula:

$$F = Q + channel\_offset * X + X * n * M + X/2, n = N\_start + 0, N\_start + 1, N\_start + 2, \ldots,$$

wherein Q represents a starting frequency of a lowest-frequency channel, channel_offset represents a channel offset, X represents a channel bandwidth, M represents a channel spacing, N_start represents a starting frequency, and M is a positive integer.

27. The method according to any one of claims 17 to 26, wherein
a value of X is agreed upon in a protocol, or a value of X is configured by a network device, or a value of X is preconfigured by using subscription information of the ambient internet of things device.

28. The method according to any one of claims 19 to 26, wherein
a value of M is agreed upon in a protocol, or a value of M is configured by a network device, or a value of M is preconfigured by using subscription information of the ambient internet of things device.

29. The method according to claim 23 or 25, wherein
a value of L is agreed upon in a protocol, or a value of L is configured by a network device, or a value of L is preconfigured by using subscription information of the ambient internet of things device.

30. The method according to claim 24 or 26, wherein
a value of N_start is agreed upon in a protocol, or a value of N_start is configured by a network device, or a value of N_start is preconfigured by using subscription information of the ambient internet of things device.

31. The method according to any one of claims 1 to 16, wherein a center frequency used when the ambient internet of things device receives the synchronization signal and/or the broadcast channel belongs to a first center frequency set.

32. The method according to claim 31, wherein the first center frequency set comprises a plurality of center frequency subsets, and different center frequency subsets are for different service types.

33. The method according to claim 31 or 32, wherein
the first center frequency set is agreed upon in a protocol, or the first center frequency set is configured by a network device, or the first center frequency set is preconfigured by using subscription information of the ambient internet of things device.

34. The method according to any one of claims 1 to 33, wherein

a transmission period of the synchronization signal is agreed upon in a protocol, or a transmission period of the synchronization signal is indicated by using a synchronization signal; and/or a transmission period of the broadcast channel is agreed upon in a protocol, or a transmission period of the broadcast channel is indicated by using a broadcast channel; or
a quantity of times a synchronization signal is allowed to be continuously transmitted in a burst is agreed upon by a protocol, or a quantity of times a synchronization signal is allowed to be continuously transmitted in a burst is indicated by a synchronization signal; and/or a quantity of times a broadcast channel is allowed to be continuously transmitted in a burst is agreed upon in a protocol, or a quantity of times a broadcast channel is allowed to be continuously transmitted in a burst is indicated by using a broadcast channel.

35. The method according to any one of claims 1 to 34, wherein

the synchronization signal is used to implement at least one of the following: clock synchronization of the ambient internet of things device, triggering the ambient internet of things device to detect the broadcast channel, carrying information about at least one ambient internet of things cell, indicating that an ambient internet of things cell exists, indicating whether an associated broadcast channel exists, obtaining symbol-level or slot-level timing, or radio resource management RRM measurement; or

the synchronization signal is used to implement at least one of the following: clock synchronization of the ambient internet of things device, triggering the ambient internet of things device to detect the broadcast channel, carrying information about at least one BSS, indicating that a BSS exists, indicating whether an associated broadcast channel exists, obtaining symbol-level or slot-level timing, or RRM measurement.

36. The method according to claim 35, wherein
the information about at least one ambient internet of things cell comprises at least one of the following: an identity of an ambient internet of things cell, partial information of an identity of an ambient internet of things cell, a service type of an ambient internet of things cell, or a synchronization signal transmission period and/or a broadcast channel transmission period of an ambient internet of things cell.

37. The method according to claim 35, wherein
the information about at least one BSS comprises at least one of the following: an identity of a BSS, partial information of an identity of a BSS, a service type of a BSS, or a synchronization signal transmission period and/or a broadcast channel transmission period of a BSS.

38. The method according to any one of claims 1 to 37, wherein
the broadcast channel is configured to implement at least one of the following: carrying a system frame number SFN, carrying system bandwidth information, carrying an identity of an ambient internet of things cell or an identity of a BSS, access control, or carrying a first system configuration.

39. The method according to claim 38, wherein
the first system configuration comprises at least one of the following: a transmission period configuration of a synchronization signal, a transmission period configuration of a broadcast channel, or a random access configuration.

40. The method according to claim 38 or 39, wherein the first system configuration is carried by using bits in the broadcast channel, or the first system configuration is carried by using a scrambling code obtained after encoding of the broadcast channel; or the first system configuration is carried by using cyclic redundancy check CRC check bits corresponding to the broadcast channel.

41. A wireless communication method, comprising:
sending, by a communication device, a synchronization signal and/or a broadcast channel to an ambient internet of things device.

42. The method according to claim 41, wherein

a coding scheme of the synchronization signal is the same as a coding scheme of the broadcast channel, or a coding scheme of the synchronization signal is different from a coding scheme of the broadcast channel; and/or a modulation scheme of the synchronization signal is the same as a modulation scheme of the broadcast channel, or a modulation scheme of the synchronization signal is different from a modulation scheme of the broadcast channel.

43. The method according to claim 42, wherein

the coding scheme of the synchronization signal comprises one of the following: non-return-to-zero inverted coding, Manchester coding, unipolar return-to-zero coding, differential biphasic coding, Miller coding, or differential coding; and/or
the coding scheme of the broadcast channel comprises one of the following: non-return-to-zero inverted coding, Manchester coding, unipolar return-to-zero coding, differential biphasic coding, Miller coding, or differential coding.

44. The method according to claim 42, wherein

a modulation waveform of the synchronization signal is amplitude shift keying ASK, or a modulation waveform of the synchronization signal is on-off keying OOK, or a modulation waveform of the synchronization signal is frequency shift keying FSK, or a modulation waveform of the synchronization signal is phase shift keying PSK; and/or

a modulation waveform of the broadcast channel is ASK, or a modulation waveform of the broadcast channel is OOK, or a modulation waveform of the broadcast channel is FSK, or a modulation waveform of the broadcast channel is PSK.

**45.** The method according to any one of claims 41 to 44, wherein when the communication device sends the synchronization signal and the broadcast channel, the synchronization signal and the broadcast channel are carried through a beacon channel.

**46.** The method according to any one of claims 41 to 45, wherein
when the communication device sends the synchronization signal and the broadcast channel, the synchronization signal and the broadcast channel are continuous in time domain, or the synchronization signal and the broadcast channel are non-continuous in time domain.

**47.** The method according to claim 46, wherein
in time domain, the synchronization signal is located before the broadcast channel, or the synchronization signal is located after the broadcast channel.

**48.** The method according to any one of claims 41 to 47, wherein
when the communication device sends the synchronization signal and the broadcast channel, the synchronization signal and the broadcast channel occupy a same bandwidth, or the synchronization signal and the broadcast channel occupy different bandwidths.

**49.** The method according to claim 48, wherein
when the synchronization signal and the broadcast channel occupy the same bandwidth, the bandwidth occupied by the synchronization signal or the broadcast channel is a part or all of a channel bandwidth of the ambient internet of things device.

**50.** The method according to claim 48, wherein
when the synchronization signal and the broadcast channel occupy different bandwidths, a bandwidth occupied by the synchronization signal is greater than a bandwidth occupied by the broadcast channel, or a bandwidth occupied by the broadcast channel is greater than a bandwidth occupied by the synchronization signal.

**51.** The method according to claim 50, wherein

when the bandwidth occupied by the synchronization signal is greater than the bandwidth occupied by the broadcast channel, the bandwidth occupied by the synchronization signal is the channel bandwidth of the ambient internet of things device; or
when the bandwidth occupied by the broadcast channel is greater than the bandwidth occupied by the synchronization signal, the bandwidth occupied by the broadcast channel is the channel bandwidth of the ambient internet of things device.

**52.** The method according to any one of claims 41 to 51, wherein before the sending, by the communication device, the synchronization signal and/or the broadcast channel, the method further comprises:

sending, by the communication device, a target signal to the ambient internet of things device, wherein
the target signal is used to trigger the ambient internet of things device to detect the synchronization signal and/or the broadcast channel.

**53.** The method according to claim 52, wherein the target signal is a preset sequence.

**54.** The method according to any one of claims 41 to 53, wherein

the ambient internet of things device corresponds to at least one ambient internet of things cell, wherein an ambient internet of things cell in the at least one ambient internet of things cell is deployed on a frequency band dedicated to the ambient internet of things device, or an ambient internet of things cell in the at least one ambient internet of things cell is deployed on a frequency band of a cellular network; or
the ambient internet of things device corresponds to at least one basic service set BSS, wherein a BSS in the at least one BSS is deployed on a frequency band dedicated to the ambient internet of things device, or a BSS in the at least one BSS is deployed on a wireless local area network WLAN frequency band.

55. The method according to claim 54, wherein
for different service types, the ambient internet of things device uses different frequency bands.

56. The method according to claim 55, wherein

a frequency band used when the ambient internet of things device receives the synchronization signal and/or the broadcast channel is a target frequency band; and
a candidate center frequency of the synchronization signal and/or the broadcast channel is a center frequency location of a part or all of channels in the target frequency band.

57. The method according to any one of claims 41 to 56, wherein

a center frequency F corresponding to the synchronization signal and/or the broadcast channel is determined based on the following formula:

$$F = Q + X*n + X/2, n = 0, 1, 2, \ldots,$$

wherein Q represents a starting frequency of a lowest-frequency channel, and X represents a channel bandwidth.

58. The method according to any one of claims 41 to 56, wherein

a center frequency F corresponding to the synchronization signal and/or the broadcast channel is determined based on the following formula:

$$F = Q + channel\_offset*X + X*n + X/2, n = 0, 1, 2, \ldots,$$

wherein Q represents a starting frequency of a lowest-frequency channel, channel_offset represents a channel offset, and X represents a channel bandwidth.

59. The method according to any one of claims 41 to 56, wherein

a center frequency F corresponding to the synchronization signal and/or the broadcast channel is determined based on the following formula:

$$F = Q + X*n*M + X/2, n = 0, 1, 2, \ldots,$$

wherein Q represents a starting frequency of a lowest-frequency channel, X represents a channel bandwidth, M represents a channel spacing, and M is a positive integer.

60. The method according to any one of claims 41 to 56, wherein

a center frequency F corresponding to the synchronization signal and/or the broadcast channel is determined based on the following formula:

$$F = Q + channel\_offset*X + X*n*M + X/2, n = 0, 1, 2, \ldots,$$

wherein Q represents a starting frequency of a lowest-frequency channel, channel_offset represents a channel offset, X represents a channel bandwidth, M represents a channel spacing, and M is a positive integer.

61. The method according to claim 59 or 60, wherein
for different service types, M have different values.

**62.** The method according to claim 61, wherein
a value of M for a delay-sensitive service is greater than a value of M for a non-delay-sensitive service.

**63.** The method according to any one of claims 41 to 56, wherein

a center frequency F corresponding to the synchronization signal and/or the broadcast channel is determined based on the following formula:

$$F = Q + X*n*M*L + X/2, n = 0, 1, 2, ...,$$

wherein Q represents a starting frequency of a lowest-frequency channel, X represents a channel bandwidth, M represents a channel spacing, different service types correspond to different values of L, and both M and L are positive integers.

**64.** The method according to any one of claims 41 to 56, wherein

a center frequency F corresponding to the synchronization signal and/or the broadcast channel is determined based on the following formula:

$$F = Q + X*n*M + X/2, n = N\_start + 0, N\_start + 1, N\_start + 2, ...,$$

wherein Q represents a starting frequency of a lowest-frequency channel, X represents a channel bandwidth, N_start represents a starting frequency, M represents a channel spacing, and M is a positive integer.

**65.** The method according to any one of claims 41 to 56, wherein

a center frequency F corresponding to the synchronization signal and/or the broadcast channel is determined based on the following formula:

$$F = Q + channel\_offset*X + X*n*M*L + X/2, n = 0, 1, 2, ...,$$

wherein Q represents a starting frequency of a lowest-frequency channel, channel_offset represents a channel offset, X represents a channel bandwidth, M represents a channel spacing, different service types correspond to different values of L, and both M and L are positive integers.

**66.** The method according to any one of claims 41 to 56, wherein

a center frequency F corresponding to the synchronization signal and/or the broadcast channel is determined based on the following formula:

$$F = Q + channel\_offset*X + X*n*M + X/2, n = N\_start + 0, N\_start + 1, N\_start + 2, ...,$$

wherein Q represents a starting frequency of a lowest-frequency channel, channel_offset represents a channel offset, X represents a channel bandwidth, M represents a channel spacing, N_start represents a starting frequency, and M is a positive integer.

**67.** The method according to any one of claims 57 to 66, wherein
a value of X is agreed upon in a protocol, or a value of X is configured by a network device, or a value of X is preconfigured by using subscription information of the ambient internet of things device.

**68.** The method according to any one of claims 59 to 66, wherein
a value of M is agreed upon in a protocol, or a value of M is configured by a network device, or a value of M is preconfigured by using subscription information of the ambient internet of things device.

**69.** The method according to claim 63 or 65, wherein
a value of L is agreed upon in a protocol, or a value of L is configured by a network device, or a value of L is preconfigured by using subscription information of the ambient internet of things device.

70. The method according to claim 64 or 66, wherein
a value of N_start is agreed upon in a protocol, or a value of N_start is configured by a network device, or a value of N_start is preconfigured by using subscription information of the ambient internet of things device.

71. The method according to any one of claims 41 to 56, wherein a center frequency used when the ambient internet of things device receives the synchronization signal and/or the broadcast channel belongs to a first center frequency set.

72. The method according to claim 71, wherein the first center frequency set comprises a plurality of center frequency subsets, and different center frequency subsets are for different service types.

73. The method according to claim 71 or 72, wherein
the first center frequency set is agreed upon in a protocol, or the first center frequency set is configured by a network device, or the first center frequency set is preconfigured by using subscription information of the ambient internet of things device.

74. The method according to any one of claims 41 to 73, wherein

a transmission period of the synchronization signal is agreed upon in a protocol, or a transmission period of the synchronization signal is indicated by using a synchronization signal;
and/or a transmission period of the broadcast channel is agreed upon in a protocol, or a transmission period of the broadcast channel is indicated by using a broadcast channel; or
a quantity of times a synchronization signal is allowed to be continuously transmitted in a burst is agreed upon by a protocol, or a quantity of times a synchronization signal is allowed to be continuously transmitted in a burst is indicated by a synchronization signal; and/or a quantity of times a broadcast channel is allowed to be continuously transmitted in a burst is agreed upon in a protocol, or a quantity of times a broadcast channel is allowed to be continuously transmitted in a burst is indicated by using a broadcast channel.

75. The method according to any one of claims 41 to 74, wherein

the synchronization signal is used to implement at least one of the following: clock synchronization of the ambient internet of things device, triggering the ambient internet of things device to detect the broadcast channel, carrying information about at least one ambient internet of things cell, indicating that an ambient internet of things cell exists, indicating whether an associated broadcast channel exists, obtaining symbol-level or slot-level timing, or radio resource management RRM measurement; or
the synchronization signal is used to implement at least one of the following: clock synchronization of the ambient internet of things device, triggering the ambient internet of things device to detect the broadcast channel, carrying information about at least one BSS, indicating that a BSS exists, indicating whether an associated broadcast channel exists, obtaining symbol-level or slot-level timing, or RRM measurement.

76. The method according to claim 75, wherein
the information about at least one ambient internet of things cell comprises at least one of the following: an identity of an ambient internet of things cell, partial information of an identity of an ambient internet of things cell, a service type of an ambient internet of things cell, or a synchronization signal transmission period and/or a broadcast channel transmission period of an ambient internet of things cell.

77. The method according to claim 75, wherein
the information about at least one BSS comprises at least one of the following: an identity of a BSS, partial information of an identity of a BSS, a service type of a BSS, or a synchronization signal transmission period and/or a broadcast channel transmission period of a BSS.

78. The method according to any one of claims 41 to 77, wherein
the broadcast channel is configured to implement at least one of the following: carrying a system frame number SFN, carrying system bandwidth information, carrying an identity of an ambient internet of things cell or an identity of a BSS, access control, or carrying a first system configuration.

79. The method according to claim 78, wherein

the first system configuration comprises at least one of the following: a transmission period configuration of a synchronization signal, a transmission period configuration of a broadcast channel, or a random access configuration.

80. The method according to claim 78 or 79, wherein the first system configuration is carried by using bits in the broadcast channel, or the first system configuration is carried by using a scrambling code obtained after encoding of the broadcast channel; or the first system configuration is carried by using cyclic redundancy check CRC check bits corresponding to the broadcast channel.

81. The method according to any one of claims 41 to 80, wherein
the communication device is a network device, or the communication device is an access point AP, or the communication device is a terminal device, or the communication device is a station STA, or the communication device is a relay device.

82. An ambient internet of things device, comprising:
a communication unit, configured to receive a synchronization signal and/or a broadcast channel.

83. A communication device, comprising:
a communication unit, configured to send a synchronization signal and/or a broadcast channel to an ambient internet of things device.

84. An ambient internet of things device, comprising a processor and a memory, wherein the memory is configured to store a computer program, and the processor is configured to invoke and run the computer program stored in the memory, to cause the ambient internet of things device to execute the method according to any one of claims 1 to 40.

85. A communication device, comprising a processor and a memory, wherein the memory is configured to store a computer program, and the processor is configured to invoke and run the computer program stored in the memory, to cause the communication device to execute the method according to any one of claims 41 to 81.

86. A chip, comprising a processor, configured to invoke a computer program from a memory and run the computer program, to cause a device on which the chip is installed to execute the method according to any one of claims 1 to 40.

87. A chip, comprising a processor, configured to invoke a computer program from a memory and run the computer program, to cause a device on which the chip is installed to execute the method according to any one of claims 41 to 81.

88. A computer-readable storage medium, configured to store a computer program, wherein when the computer program is executed, the method according to any one of claims 1 to 40 is implemented.

89. A computer-readable storage medium, configured to store a computer program, wherein when the computer program is executed, the method according to any one of claims 41 to 81 is implemented.

90. A computer program product, comprising computer program instructions, wherein when the computer program instructions are executed, the method according to any one of claims 1 to 40 is implemented.

91. A computer program product, comprising computer program instructions, wherein when the computer program instructions are executed, the method according to any one of claims 41 to 81 is implemented.

92. A computer program, wherein when the computer program is executed, the method according to any one of claims 1 to 40 is implemented.

93. A computer program, wherein when the computer program is executed, the method according to any one of claims 41 to 81 is implemented.

**100**

FIG. 1

FIG. 2

FIG. 3

**Network device**

TX

AMP

RX

LNA

Carrier

Backscattered signal

**Zero-power terminal**

Logical processing

Energy harvesting

FIG. 4

$R_2$

$R_3$

Binary encoding

$L_2$

$L_1$

$C_1$

$R_L$

S

$C_2$

FIG. 5

1  0  1  1  0  0  1  0  1  0  0  1  0  1  1

FIG. 6

1  0  1  1  0  0  1  0  1  0  0  1  0  1  1

FIG. 7

1  0  1  1  0  0  1  0  1  0  0  1  0  1  1

FIG. 8

1  0  1  1  0  0  1  0  1  0  0  1  0  1  1

FIG. 9

1  0  1  1  0  0  1  0  1  0  0  1  0  1  1

FIG. 10

**200**

| Ambient internet of things device |
| Communication device |

S210: A communication device sends a synchronization signal and/or a broadcast channel to an ambient Internet of things device

S220: The ambient Internet of things device receives the synchronization signal and/or the broadcast channel

FIG. 11

| Synchronization signal | Broadcast channel |

FIG. 12

| Start header | Synchronization signal | Broadcast channel |
|---|---|---|

FIG. 13

| Synchronous signal | Broadcast channel |
|---|---|

| First sequence | Second sequence |
|---|---|

FIG. 14

Periodic synchronization signals/broadcast channels of a long-term cell

Short-term periodic or bursty synchronization signals/broadcast channels of a short-term cell

FIG. 15

FIG. 16

Ambient internet of things
device 300

Communication unit 310

FIG. 17

Communication device 400

Communication unit 410

FIG. 18

Communication device
500

Memory
520

Processor
510

Transceiver
530

FIG. 19

Apparatus 600

Input interface
630

Processor
610

Memory
620

Output
interface
640

FIG. 20

Communications system
700

Ambient
internet of
things device

710

Communication
device

720

FIG. 21

## INTERNATIONAL SEARCH REPORT

| International application No. |
|---|
| **PCT/CN2023/074959** |

**A. CLASSIFICATION OF SUBJECT MATTER**

H04W56/00(2009.01)i; H04B5/00(2006.01)i

According to International Patent Classification (IPC) or to both national classification and IPC

**B. FIELDS SEARCHED**

Minimum documentation searched (classification system followed by classification symbols)

IPC:H04W H04B

Documentation searched other than minimum documentation to the extent that such documents are included in the fields searched

Electronic data base consulted during the international search (name of data base and, where practicable, search terms used)

WPABSC; CNTXT; ENTXTC; VEN; DWPI; ENTTXT; CNKI; 3GPP: 无功耗, 零功耗, 环境, 物联网, 电子标签, 同步, 广播, 信道, Zero, Power, ambient, IOT, Electronic Tag, RFID Synchronization, Broadcast, Channel, PBCH

**C. DOCUMENTS CONSIDERED TO BE RELEVANT**

| Category* | Citation of document, with indication, where appropriate, of the relevant passages | Relevant to claim No. |
|---|---|---|
| X | WO 2023272443 A1 (GUANGDONG OPPO MOBILE TELECOMMUNICATIONS CORP., LTD.) 05 January 2023 (2023-01-05) <br> description, paragraphs [0053]-[0123] | 1-19, 24, 27-59, 64, 67-93 |
| X | CN 115623559 A (SPREADTRUM COMMUNICATIONS (SHANGHAI) CO., LTD.) 17 January 2023 (2023-01-17) <br> description, paragraphs [0079]-[0088] | 1, 5-6, 41, 45-46, 81-93 |
| X | CN 111630903 A (INTERDIGITAL PATENT HOLDINGS, INC.) 04 September 2020 (2020-09-04) <br> description, paragraphs [0222]-[0251] | 1, 5-6, 41, 45-46, 81-93 |
| X | CN 108734040 A (SOOCHOW UNIVERSITY) 02 November 2018 (2018-11-02) <br> description, paragraphs [0006]-[0032] | 1, 5-6, 41, 45-46, 81-93 |
| A | CN 109891996 A (GUANGDONG OPPO MOBILE COMMUNICATIONS CO., LTD.) 14 June 2019 (2019-06-14) <br> entire document | 1-93 |
| A | EP 2453710 A1 (RESEARCH IN MOTION LIMITED) 16 May 2012 (2012-05-16) <br> entire document | 1-93 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **10 October 2023** | **25 October 2023** |

| Name and mailing address of the ISA/CN | Authorized officer |
|---|---|
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/074959**

| Patent document cited in search report | | | Publication date (day/month/year) | Patent family member(s) | | | Publication date (day/month/year) |
|---|---|---|---|---|---|---|---|
| WO | 2023272443 | A1 | 05 January 2023 | | None | | |
| CN | 115623559 | A | 17 January 2023 | WO | 2023284261 | A1 | 19 January 2023 |
| CN | 111630903 | A | 04 September 2020 | US | 2020314752 | A1 | 01 October 2020 |
| | | | | US | 11470553 | B2 | 11 October 2022 |
| | | | | US | 2023189148 | A1 | 15 June 2023 |
| | | | | RU | 2742101 | C1 | 02 February 2021 |
| | | | | AU | 2022201239 | A1 | 17 March 2022 |
| | | | | MX | 2020005607 | A | 20 October 2020 |
| | | | | AU | 2018375768 | A1 | 18 June 2020 |
| | | | | AU | 2018375768 | B2 | 25 November 2021 |
| | | | | KR | 20200102996 | A | 01 September 2020 |
| | | | | JP | 2021506152 | A | 18 February 2021 |
| | | | | SG | 11202005072 | VA | 29 June 2020 |
| | | | | WO | 2019108940 | A1 | 06 June 2019 |
| | | | | CA | 3083915 | A1 | 06 June 2019 |
| | | | | JP | 2023062107 | A | 02 May 2023 |
| | | | | IL | 274994 | A | 30 July 2020 |
| | | | | EP | 3718348 | A1 | 07 October 2020 |
| | | | | EP | 3718348 | B1 | 13 September 2023 |
| | | | | IN | 202017022835 | A | 04 September 2020 |
| | | | | VN | 74697 | A | 25 December 2020 |
| CN | 108734040 | A | 02 November 2018 | CN | 108734040 | B | 13 July 2021 |
| CN | 109891996 | A | 14 June 2019 | EP | 3503664 | A1 | 26 June 2019 |
| | | | | EP | 3503664 | A4 | 18 September 2019 |
| | | | | EP | 3503664 | B1 | 07 October 2020 |
| | | | | US | 2019223124 | A1 | 18 July 2019 |
| | | | | US | 11096131 | B2 | 17 August 2021 |
| | | | | WO | 2019080120 | A1 | 02 May 2019 |
| | | | | WO | 2019080153 | A1 | 02 May 2019 |
| EP | 2453710 | A1 | 16 May 2012 | CA | 2750554 | A1 | 11 May 2012 |
| | | | | CA | 2750554 | C | 14 October 2014 |
| | | | | EP | 2453710 | B1 | 30 October 2013 |
| | | | | US | 2012122495 | A1 | 17 May 2012 |
| | | | | US | 8897818 | B2 | 25 November 2014 |

Form PCT/ISA/210 (patent family annex) (July 2022)